# EUROPEAN PATENT SPECIFICATION

(11) **EP 1 631 411 B1**
(45) Date of publication and mention of the grant of the patent: **26.10.2011**
(21) Application number: 04732242.5
(22) Date of filing: 11.05.2004
(51) Int. Cl.: B23K 1/00, B23K 3/00

(54) **METHOD AND DEVICE FOR PERFORMING A PRE- AND POSTBRAZING TEMPERATURE CONTROLLED MARTENSITE-FREE BRAZING PROCESS USING A CONTROLLED BRAZING TEMPERATURE**
VERFAHREN UND VORRICHTUNG ZUR DURCHFÜHRUNG EINES TEMPERATURGESTEUERTEN, MARTENSITFREIEN VOR- UND NACHLÖT-LÖTPROZESSES UNTER VERWENDUNG EINER GESTEUERTEN LÖTTEMPERATUR
PROCEDE ET DISPOSITIF PERMETTANT DE REALISER UN PROCESSUS DE BRASAGE SANS MARTENSITE A TEMPERATURE DE PRE-BRASAGE ET DE POST-BRASAGE REGULEE, AU MOYEN D'UNE TEMPERATURE DE BRASAGE REGULEE

(30) Priority: 12.05.2003 SE 0301401
(43) Date of publication of application: 08.03.2006
(73) Proprietor: Safetrack Infrasystems Sisab Ab, 245 93 Staffanstorp (SE)
(72) Inventor: PETTERSEN, Ola, S-222 26 Lund (SE)
(74) Representative: Persson, Albin
(86) International application number: PCT/SE2004/000713
(87) International publication number: WO 2004/103628

(56) References cited:
- WO-A1-01/83157
- DE-A1- 3 628 246
- US-A1- 2002 190 097
- US-B1- 6 168 064

## Description

The present invention relates to a new method for brazing, for example, a connecting piece of electrically conductive material with a metal surface with the aid of a new brazing process, in which one regulates and controls, phase by phase, the temperature during pre-brazing temperature phases and post-brazing temperature phases of the brazing process, and the filler temperature during the very phase of joint formation, in order to obtain a martensite-free brazing with minimised energy consumption and increased safety. The result is thus a brazing without adverse structural changes (martensite formation) in the steel material after brazing while also achieving increased process security and optimisation of other factors. The present invention also describes a combined device for execution of the method, which can, however, also be combined with other types of brazing (see for example US-A-2002 0190097).

The methodology development towards a martensite-free brazing process has been a step-by-step process. Swedish patent 9003708-6 (469 319) discloses a pin-brazing method minimising martensite formation, and Swedish patent 0101688-0 (518 177) describes a martensite-free brazing process.

However, improvements of both the process and the devices for its execution would be desirable because of practical problem of the execution of the brazing itself, and the fact that it is desirable to be able to braze all types and sizes of, for example, connecting pieces of electrically conductive material. For large-size connections with a cable of a greater diameter, more energy must be supplied in order to achieve an acceptable brazing without the temperature during brazing sinking or rising beyond acceptable limits.

Particularly interesting is brazing with so-called silver filler material, where the melting temperature of the filler material is relatively high, for example, 650° C. In order to obtain a good brazing, the temperatures of both the filler material and immediately adjacent metal surfaces must exceed the filler's melting temperature. Therefore, the necessary brazing temperature must exceed the filler's melting temperature, which in this context acts as a lower limit. If steel is heated to above approximately 720° C, structural changes occur in the material, which changes, if the temperature subsequently falls in an unfavourable way, eventually give rise to a permanent structural change in the material (martensite formation). A way of avoiding martensite formation is to make sure the brazing temperature has a value lower than 720° C. Allowed values for the brazing temperature would thus be between 650° C and 720° C. Another way is to first raise the brazing temperature to a value higher than 720° C, and then let the temperature of the steel fall in a favourable way according to traditional metallurgical principles so that a structural change of potentially dangerous structures in the steel are allowed to take place in such a way that the end result is not a hardened steel (with martensitic structure).

In prior art, the aim has been to set the brazing temperature to a value between slightly above the filler's melting temperature and slightly below the critical temperature in steel for martensite formation. A certain power was fed to the parts of the braze joint, and the feed was interrupted when the brazing temperature was reached. With an appropriate combination of time and power, a connection of smaller dimension could be brazed with a martensite-free result.

In brazing of large-dimension connections, the method has major disadvantages. It turns out the temperature in the joint's parts does not rise linearly as a function of time, but the temperature curve levels out over time. For example, at a certain, too low, power, the temperature initially rises rather rapidly, but the inclination is then reduced successively, and the curve eventually levels out and approaches a limit value of, in this case, too low brazing temperature. In this case, the brazing time may approach infinity without the right brazing temperature being reached. The reached temperature, however, remains rather stable.

For example, at a certain, too high, power, the limit value lies much higher than the allowed value for the brazing temperature, so the brazing process must be interrupted rather quickly. In this case the process is interrupted while the temperature increase of included joint parts is sharp, i.e., the temperature curve is steep. Variations in included parts, for example, volume, geometry, melting point, heat conductivity and other material-specific characteristics, the varying quality of the electric arc, variations in resistance between different carbon electrodes, operator- and device-dependent factors or other varying factors, give rise to a certain error margin regarding the reached temperature. In the example above with too high power, these sources of errors together with the sharply rising temperature curve lead to insecurity as to the reached brazing temperature. Thus, interrupting the energy feed when the temperature rises quickly leads to a too great error margin between desirable brazing temperature and actual brazing temperature.

Therefore, an appropriate compromise between these two extremes has had to be chosen, where the supplied power has been chosen so that the temperature curve at the interruption of the energy feed is flat enough for a necessary rather stable brazing temperature to be reached after an acceptably long time.

Three important partial factors determining the number of brazings per battery charging and depending on the joint and process, in addition to the level of supplied power and the total energy consumption per brazing, are the mass and specific heat capacity of included material, the time period spent in the brazing process, and heat losses mainly by conduction. When brazing of large-dimension connections these factors have the following effects:
1. Large-dimension connections of the same material have greater mass and require more heat in order to reach the correct brazing temperature.
2. Limitations in, for example, battery capacity call for prolongation of the brazing period in order to reach the correct brazing temperature, which, with a flat temperature curve, leads to increased energy consumption.
3. Large-dimension connections lead to increased cooling losses mainly by conduction because of increased cable area, and increased area and volume of the material in the vicinity of the braze joint. The cooling losses increase even more as the heat conductivity of the material itself increases with increased temperature.

In total, this means that brazing of large-dimension connections has been difficult or impossible with prior-art technology.

Furthermore, batteries are used as power source at the execution of brazings and it is therefore always a desire to save the energy needed for a brazing in order to be able to accomplish more brazings per battery before recharge.

Another inconvenience has been the brazings that have failed for different reasons, for example, incorrect handling of the brazing gun by the operator, insufficient earthing, temperature, air humidity, different types of connections, cables and rail material. A failed brazing leads to a reduced number of approved brazings before recharge of the battery is required, unnecessary consumption of material and extra work effort from the operator, and also increased irritation. When working on, for example, railway rails, where time is limited, is it desirable to limit the number of interruptions to a minimum.

A problem has been that the process has not been able to handle disturbances or errors in the brazing process once the energy feed has been started. The quality of the brazing has completely depended on the subjective judgement of the operator. If, for example, the build-up of heat in the electric arc has not been normal because of an occasionally poorly developed electric arc or intermittent failures of the arc during the brazing process, the process has continued without regard to this and without any feedback to the operator. Furthermore, if the electric arc has been prematurely extinguished before the intended time period has passed, the operator has not had any possibility to determine whether the interrupted brazing was planned or unplanned. Furthermore, if the arrangement has not managed to ignite the electric arc or if it has been extinguished during a brazing process, the arrangement has still been electrically conductive, and it has unfortunately been possible for an undesired electric arc to arise when the operator has removed the gun from the connection or when the operator has manually touched the electrode still under voltage, or when the guard ring has partially come off and come into contact with the electrode, resulting in possible injuries for the operator and/or damage to the equipment.

The operator has also run the risk of unintentionally starting a brazing process when setting or adjusting the lifting height of the electrode, resulting in risk of damaged adjustment equipment or other equipment, or injured personnel.

Another practical problem has been the operator's way of handling the earthing using the metal ring provided in the front portion of the brazing gun. A secure brazing depends on how the operator applies the gun against the electrically conductive connecting piece. A tilted gun can result in the electric arc breaking and the brazing failing, Furthermore, problems of braze-joint strength can arise if the electrically conductive connecting piece, for example, a cable shoe, is not oriented so that the braze joint is evenly thick.

A problem of the current brazing gun has been that dirt and gas have penetrated into the gun through an axial bushing. This has created problems with the lifting mechanism. Furthermore, there is an electromagnet in the brazing gun, pulling the above-mentioned axis towards a rubber insert with a shock-absorbing effect. However, the elasticity of the insert is degraded because of its sensitivity to temperature variations and ageing effects, which is why the lifting height cannot be held constant for every brazing situation, which in turn means variations in the brazing outcome, that is, quality.

The present invention relates to a method according to claim 1 and a device for execution of the method, according to claim 2. Both the method and the device now allow for an extension of the use to large-dimension material, and reduced consumption of energy and material without negative structural changes (martensite formation) in the materials remaining after a completed brazing process. This is especially important in the use on railway rails and other construction elements and structures under heavy load.

An object is that an electronics unit contains a number of formulas. Every formula determines how the current or power, i.e., what is referred to as output in the application, varies over time for a special brazing situation. The operator selects and sets the formula that suits the material and conditions required by every brazing situation, and an optimal result is thus obtained.

The electronics unit also has an interrupt procedure in the case of the electric arc being extinguished during brazing. The electronics unit then re-ignites the electric arc and completes the brazing with regard to the disruption. That way, loss of material and energy which would result from a failed, interrupted brazing is avoided. Furthermore, the additional work effort of removing the connection and re-grinding the base material is avoided.

Another object of the invention is that the electronics unit contains a detection and registering device providing information about the brazing process, and about battery status between the brazings. This information is stored in the electronics unit where it is processed and communicated to the operator after a completed brazing. The information is also stored for retrieval at a later time, and it can then be retrieved in electronic or other form, for example, as an acknowledgement of the result of the brazings.

Another object of the invention is that energy feed in the brazing process is further reduced by the electrically conductive connecting piece being knurled and/or blasted. Heat is transferred from an electric arc to a carbon layer on the workpiece released from the carbon electrode in the brazing gun. Subsequently, the heat descends into the surface of the connecting piece of electrically conductive material.

By this surface being knurled and/or blasted or exposed to other surface-modifying treatment, a larger interfacing surface is created, as compared to a smooth surface. The ratio of surface to mass consequently increases which results in a faster absorption of energy and consequently heating of the electrically conductive connecting piece. The energy feed can thereby be reduced with a maintained result of the brazing.

Furthermore, another object is to reduce filler material when manufacturing the electrically conductive connecting piece. At the time of manufacturing, the brazing clip placed on the connecting piece, for example, a cable shoe, is partially pressed down into the electrically conductive material. Because the new process is so fast, no substantial oxidation will be formed on the connecting piece's bottom surface or on the filler material before a metallic connection takes place. No flux between the filler and the electrically conductive connecting piece is needed. There is no need to make any holes in the bottom surface of the brazing clip when manufacturing. The brazing clip is now attached sideways over the connecting piece and gets no protruding parts. This arrangement caters for material conservation. Neither is there a need for holes on the top and/or bottom surface of the brazing clip, because the brazing clip is now locked with dual clamping tabs, instead of the previous, single clamping tab.

An object of the invention is the possibility to use larger and more heavy-duty connecting pieces of electrically conductive material, for example, cable shoes, and the possibility to use cables or threads which have a larger diameter to these connecting pieces.

Another object of the present invention is the possibility to, in an easier and safer manner, ignite the electric arc in the brazing process and then maintain it so that it does not go out during the brazing process. This is achieved by impregnating the surface area of the carbon electrode with an oil-based product, for example, paraffin wax, petroleum jelly or similar. During the brazing process, this impregnation forms a gas that protects the electric arc. The end surfaces of the electrode are, however, not impregnated. Therefore, in the starting moment when the electric arc is created, no energy is unnecessarily lost because of heating and gasification of the impregnator from the end surfaces. This is important since it is desirable, initially in the brazing process, to raise the surface temperature of the electrically conductive connecting piece as fast as possible. An initial high temperature reduces the risk of the carbon layer later in the brazing process coming loose from the supporting surface and interfering with the electric arc.

A further object is to give the operator a better possibility to more easily accomplish a satisfactory earthing for a brazing. Earthing the electrically conductive connecting piece via, for example, the railway rails is avoided because secondary arcs may be created between, for example, cable shoe and railway rails, which arcs may negatively affect the railway rails in the form of martensite formation. Such a method leads to a greater risk of poor earthing because of high contact resistance between earthing device and rails, and between rails and connecting piece. Preparing the rails for earthing is a further work task. For a safer earthing, an earthed guard ring of metal is used, which ring is brought into direct contact with the electrically conductive connecting piece, and in order for this guard ring to approach the electrically conductive workpiece perpendicularly, the ring is suspended in a gimballed gyro. Therefore, even if the operator tilts the brazing gun in another angle against the connecting piece, the central axis of the guard ring will not change its angle to the surface of the connecting piece, so the risk of poor earthing and/or extinguished electric arc is eliminated.

A object is that, during the brazing process when the filler melts, a gyro suspension of the guard ring allows, for example, a cable shoe to be shaped according to the possibly uneven supporting surface, in such a way that an evenly thick filler column is obtained between the electrically conductive connecting piece and the workpiece. This owes to the fact that when, for example, the cable shoe becomes hot, it also becomes so soft that the operator's pressure on the brazing gun, which is forwarded via the guard ring, shapes, for example, the cable shoe according to the supporting surface, regardless of whether the guard ring's angle towards the brazing gun, workpiece and/or connecting piece is changed during the brazing operation.

Furthermore, it is an object that the electrode's lifting height remains constant and repeatable for every lifting movement. Therefore, the brazing gun contains a hydraulic continuous absorber. It causes the electrode to be lifted at a slower, more controlled speed and achieves a stable lifting height time after time. In the back end of the brazing gun is an adjustment device for the lifting height to different positions.

Another advantage of the present invention is that inserting an adapter in the electrode holder and selecting the appropriate formula in the electronics unit makes it possible to use the current brazing process for the old type of brazing - pins and connecting pieces where there are no or lax requirements for martensite-free brazings.

Another advantage of the present invention is that the guard ring acts as a mechanical overheating protection in such a way that if the process builds up surplus heat, the guard ring is softened by this heat and, because of the operator's pressure on the brazing gun, the shape of the guard ring is changed and it penetrates deeper into its conical seat, whereby the distance of the brazing gun and the electrode to, for example, the cable shoe, is reduced. The reduced lifting height leads to a reduction in the electric arc's electric resistance. With a given current, this means reduced power build-up and results in the mechanical overheating protection.

A further object of the present invention is that a protective boot is applied between an axis and the front end of the brazing gun. That way, dirt and gas are prevented from entering into the brazing gun through the axial bushing.

The characteristics of the present invention will appear from the appended claims.

The present invention will now be more closely described with reference to the appended drawings, which show a preferred embodiment of the invention where:
Figure 1 shows a schematic overview of some of the parts included in the brazing process.
Figure 2 is a graph 1 showing the current or power, i.e., the output in relation to the time during the brazing process for a formula.
Figure 3 is a graph 2 of another formula.
Figure 4 is a graph 3 of yet another formula.
Figure 5 is a graph 4 of a formula.
Figure 6 is a graph 5 of yet another formula.
Figure 7 is a graph 6 of a specific situation.
Figure 8 is a graph A showing the resulting temperatures at different applications of prior art.
Figure 9A shows the components included in an electrically conductive connecting piece excluding the brazing clip.
Figure 9B shows an electrically conductive connecting piece with an unmounted brazing clip.
Figure 10 shows an electrically conductive connecting piece with a brazing clip partially pressed into the homogeneous plate.
Figure 11 shows how the carbon electrode and the guard ring, which are joined with the brazing gun, work on an electrically conductive connecting piece.
Figure 12 shows how a carbon electrode, which is joined with the brazing gun,
is moved towards an electrically conductive connecting piece in the form of a cable shoe.
Figure 13 shows how a carbon electrode together with a guard ring, which are joined with the brazing gun, are moved towards an electrically conductive connecting piece in the form of a cable shoe.
Figure 14 shows how a guard ring from the brazing gun earths the connecting piece.
Figure 15 shows how the electrically conductive connecting piece in the form of a cable shoe is moved towards a workpiece by the brazing gun via a carbon electrode and guard ring.
Figure 16 shows the bottom of an electrically conductive connecting piece in the form of a cable shoe with a pressed-on brazing clip.
Figure 17 shows what happens in the brazing process regarding polarity.
Figure 18A shows a knurled connecting piece without brazing clip.
Figure 18B shows a schematic cross-section of an electric arc between a carbon electrode and a cable shoe/carbon layer.
Figure 18C shows a picture of a cable shoe from above with a carbon layer on the top surface.
Figure 18D shows a cable shoe with a cavity on the top surface.
Figure 18E shows variants of the cavities in shape, number and position on the cable shoe's top surface.
Figure 18F shows a cross-section view the effect of the cavity on the released carbon layer's thickness and geometric shape.
Figure 19 shows the polarisation in a brazing process according to previous methods.
Figure 20 shows the polarisation of the present brazing process with a knurled and/or blasted or in other ways surface-modified connecting piece of electrically conductive material.
Figure 21 shows an impregnated carbon electrode being moved towards a knurled connecting piece of electrically conductive material.
Figure 22 shows the principal parts included in a gyro and guard ring.
Figure 23 is a picture of a gyro when the brazing gun is tilted, and a carbon electrode and a guard ring.
Figure 24 shows the principal parts included in a gyro as well as a carbon electrode, an electrode holder and a guard ring.
Figure 25A shows a gyro with a carbon electrode in a tilted position.
Figure 25B shows a gyro with a carbon electrode in a position tilted in another direction.
Figure 26A shows a cross-section view of a ring holder, inserted in an intermediate ring.
Figure 26B is another view of the same parts.
Figure 26C shows how the ring holder and the intermediate ring are joined with a fixed joint.
Figure 26D is another view of the same parts.
Figure 26E shows a complete gyro link including a carbon electrode and a guard ring.
Figure 27 shows a gyro with a carbon electrode and a guard ring before start of the brazing process.
Figure 28 shows a cross-section of a ring holder with a guard ring mounted in a somewhat tilted position.
Figure 29 shows a cross-section of the ring holder with a guard ring inserted straight into the ring holder.
Figure 30 shows a cross-section of a guard ring in a ring holder where the guard ring has been deformed by heat and pressure.
Figure 31 shows a picture of a tilted gyro with a guard ring.
Figure 32 shows a picture of the same gyro at another tilt angle.
Figure 33 shows parts included in the front portion of the brazing gun against the connecting piece.
Figure 34 shows some parts mounted.
Figure 35 shows the parts mounted; some are shown in cross-section.
Figure 36A is a view from another angle of the mounted parts.
Figure 36B shows a shape transition of the guard ring as a result of overheating.
Figure 37 shows an electrically conductive connecting piece in a brazing process where the brazing gun has a normal position of 90 degrees. ,
Figure 38 is the same view but where the brazing gun does not form a 90-degree angle with the supporting surface.
Figure 39 is also the same view but with an angular offset in the other direction.
Figure 40 shows an electrically conductive connection to be brazed onto a non-planar workpiece.
Figure 41 shows an electrically conductive connection that has been secured onto a non-planar workpiece.
Figure 42 shows how the filler is melted off asymmetrically during the brazing process.
Figure 43 shows a complete brazing where the filler has completely melted.
Figure 44 is a side elevational view of a brazing gun.
Figure 45 is a side elevational view of a brazing gun with its front portion in cross-section.
Figure 46 is the same side elevational view of the brazing gun but with a tilted gyro.
Figure 47 is an exploded view of the front portion of the brazing gun.
Figure 48 is an exploded view of the front portion of the brazing gun for brazing with other types of brazing pins.
Figure 49 is a back view of the brazing gun.
Figure 50 is a front view of the brazing gun.
Figure 51 is a side elevational view of a brazing gun with its end portion in cross-section.

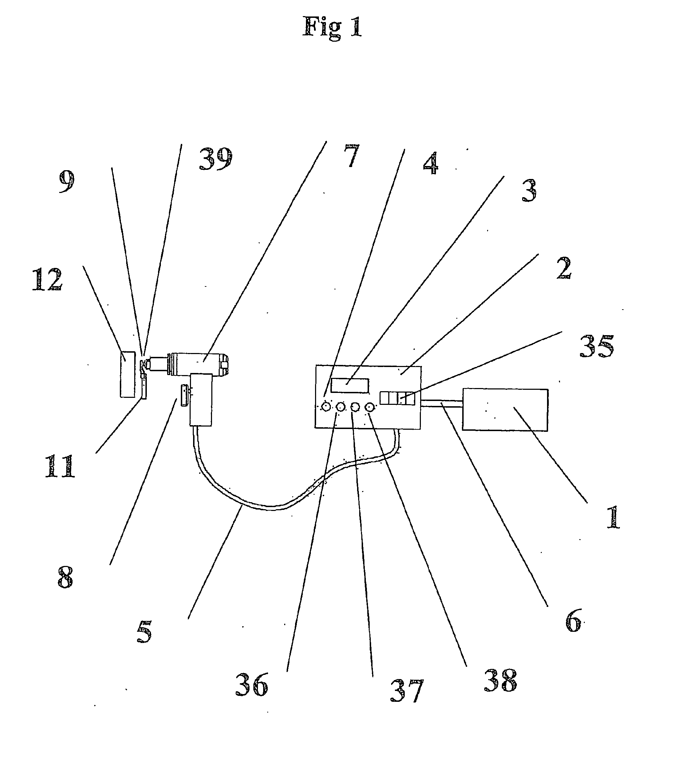

Figure 1 shows a schematic overview of some of the parts included in the brazing process; it shows a general picture of the brazing process from its power source which is a battery 1 from where the current is fed to the electronics unit 2 via circuitry 6. On the electronics unit 2 there is a display 3 and a sound device 4. The electronics unit 2 receives and processes incoming information and data from the brazing gun 7 via its power-supply circuitry and signal cable 5 and incoming data from the battery 1 via a circuitry 6. In the electronics unit 2 there are a number of pre-programmed formulas where every formula has unique attributes as to how the current or power, output, is to vary over time for a specific brazing situation. The operator selects a formula with the aid of the formula selector 37 which suits the specific brazing situation adapted to material and conditions required by the specific brazing situation. The electronics unit 2 also contains a detection and registration device, which provides information about what is happening during the brazing. This information is stored and processed in the electronics unit 2 and forwarded to the operator after completed brazing by way of a display 3 and/or the sound device 4. The information can also be stored for retrieval at a later time in electronic or other form via one of the data ports 35. This acts as an acknowledgement of the result of the brazing. The electronics unit 2 also contains communications ports 35 for connection of external equipment, for example, printers, programming equipment, and data communications equipment. There is also a power and charging port 36 for battery-powered equipment and charging equipment. Also visible are a formula selector 37 and an alarm-acknowledgement function 38.

When the power switch 8 closes an electric circuit, a carbon electrode 9 mounted in the electrode holder 39 will initially short-circuit the circuit against a connecting piece 11 of electrically conductive material, for example, a cable shoe, and afterwards, when the carbon electrode 9 in the brazing gun 7 lifts from the connecting piece 11, ignite an electric arc which, protected by the guard ring(s), will work on the surface of the connecting piece 11. The connecting piece 11 will be brazed onto the workpiece 12.

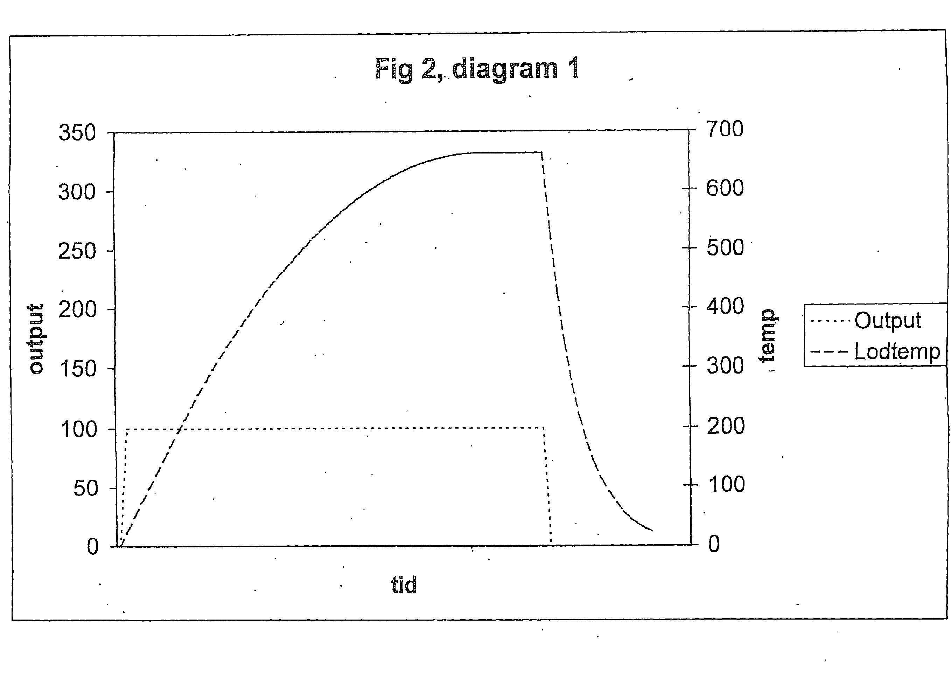

Figure 2 is a graph 1 showing the current or power, i.e., output in relation to time during the brazing process according to a specific formula. The output scale of the graph is one of many possible scales depending on the conditions before a brazing. Output indicates an average power in the electric arc 34 and the electrode 21, alternatively delivered average current. A constant output makes the temperature rise and level out on the desired value. The output values are chosen to reach a stable final temperature in the brazing. The filler's melting point is about 650 degrees Celsius. When the temperature exceeds 720 degrees Celsius in steel which subsequently cools off fast, martensite is formed. "Filler temp" indicates the brazing clip's temperature on the bottom of the connecting piece 11. The time is very short and depends on the working material, heat losses, filler material, etc.

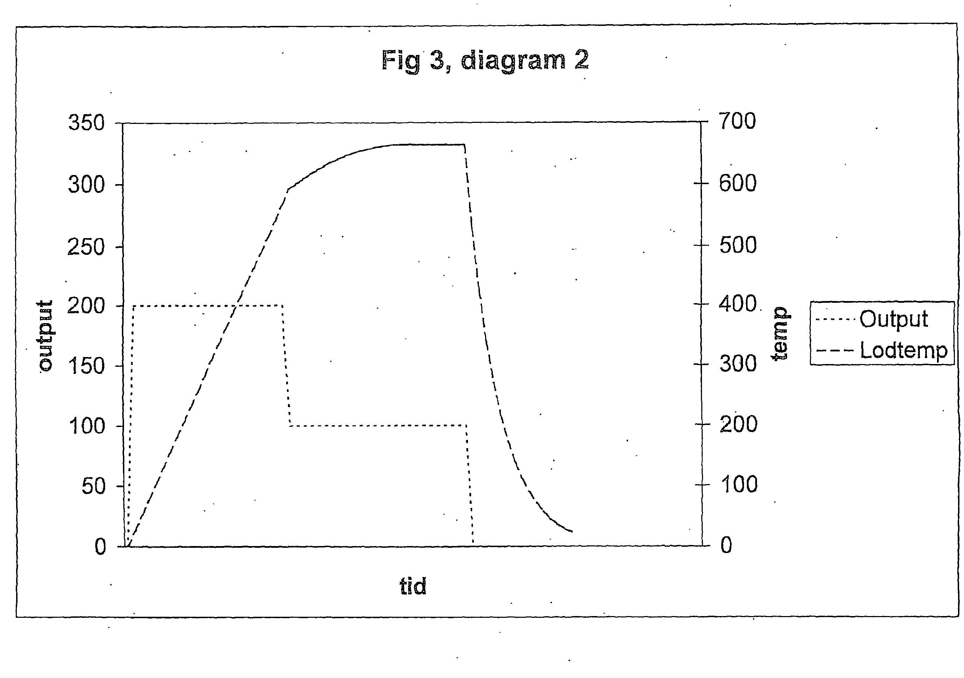

Figure 3 is a graph 2 of another formula where it is desired to reduce the total brazing period. In order to shorten the total brazing period, the output can vary over time, so that a higher initial output gives a faster heating, so that lower output can then be applied and an appropriate final temperature is reached, with sufficient error margin. The maximum value of the initial output is chosen so that the energy consumed from the batteries does not lead to unnecessary limitation of the number of possible brazings because of battery failure. Furthermore, it is a fact that short time during the brazing process allows less time for oxidation between the connecting piece 11 and the underlying filler, and less risk for disturbances, and it facilitates the operator's work. A further reason why shorter brazing periods are desired is that heat losses are reduced, via heat, radiation and convection.

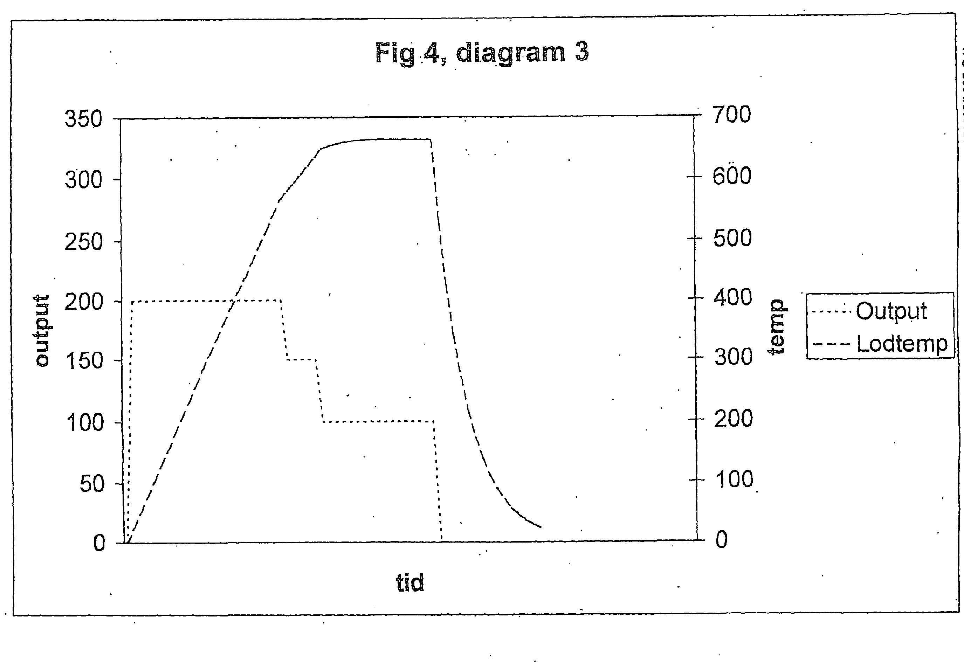

Figure 4 is a graph 3 of yet another formula where a continued division of output into appropriate levels yields further time gains with maintained control of the final temperature.

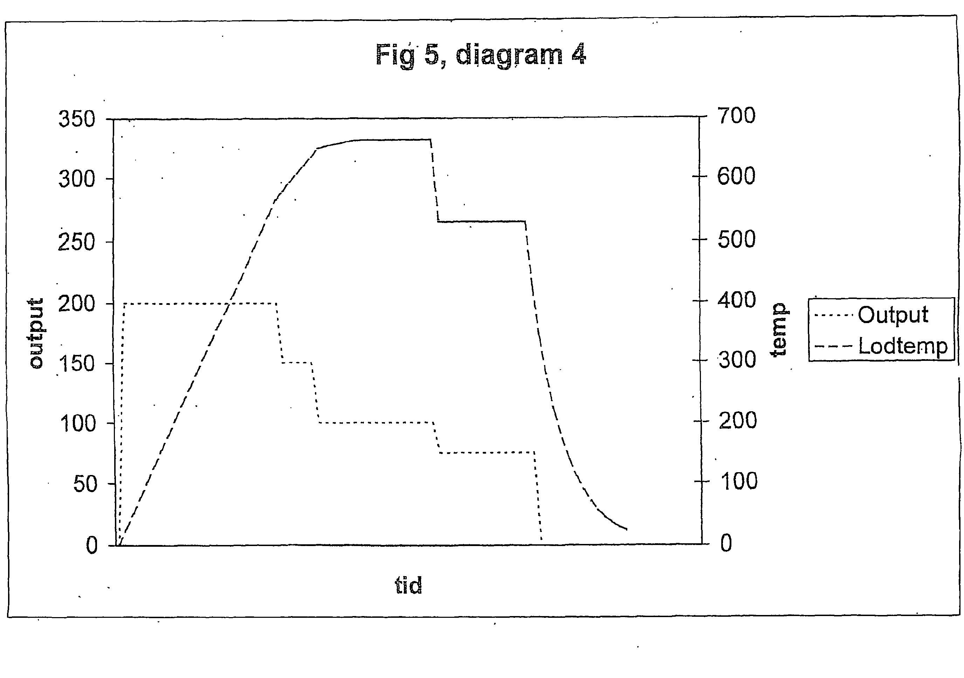

Figure 5 is a graph 4 of another formula. Here, a final output stage makes the temperature in, for example, heat-affected railway rails fall to an appropriate value during an appropriate time period, where re-formation of any martensite can come about. A de-curing process takes place. Temperature and time period are material-specific for different alloys of steel.

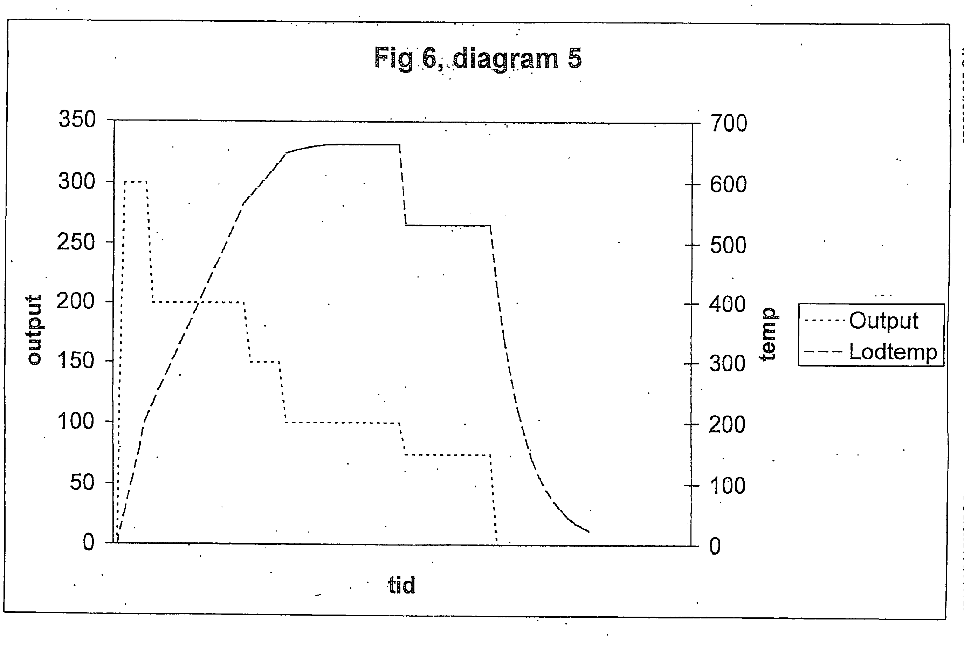

Figure 6 is a graph 5 of yet another formula which yields an even greater time gain in the brazing and a more secure brazing. During the brazing process, material is released from the electrode 9, settling as a carbon layer 27 on the connecting piece 11, for example, a cable shoe. If this carbon layer 27 comes loose from the cable shoe 11, it can negatively affect the electric arc so that it becomes unstable or goes out. The bond strength of the carbon layer 27 to the cable shoe 11 is improved if the temperature of the cable shoe's 11 surface of, for example, copper, is rapidly raised to a high value. The graph 5 in the drawing shows a short initial output of high intensity, which leads to faster heating of the cable shoe's 11 surface layer where the carbon-material layer 27 will fall. The stage is so brief that the risk of battery failure is minimal.

Short, intense, high output gives better bond strength between the carbon layer 27 and the cable shoe 11, and thus a more secure brazing and reduced risk of the electric arc in the brazing process being disturbed or extinguished.

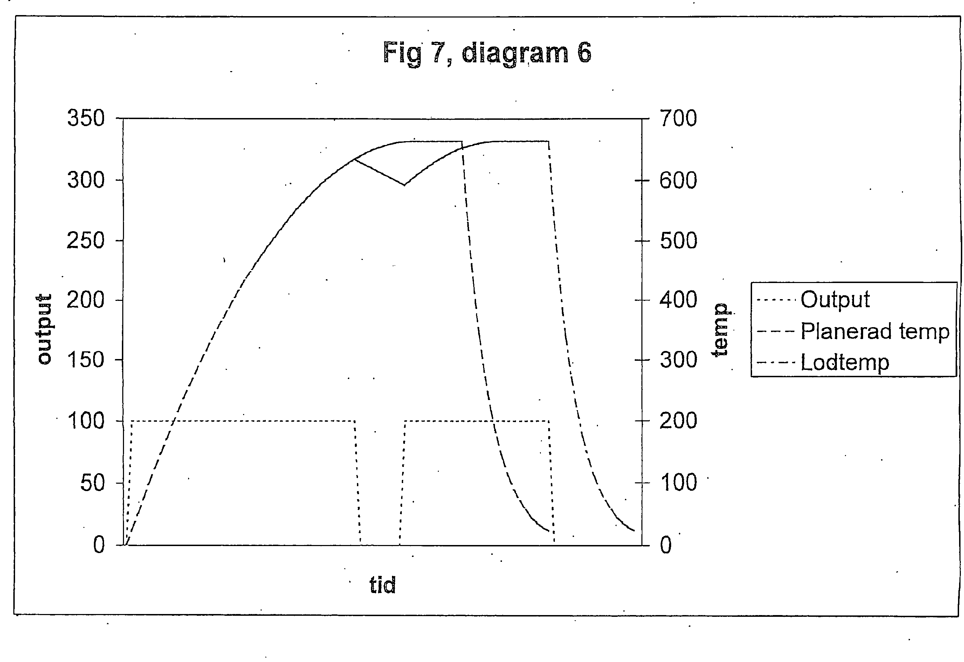

Figure 7 is a graph 6 of a specific situation. The graph 6 in the drawing shows the result of an interruption in output. The temperature curve "Planned temp" equals the one shown in Figure 2 for graph 1. If, for some reason, the electric arc 26 is now extinguished during the brazing process, the output will be interrupted, which is detected by the electronics unit 2. The electrode 9 is then lowered towards the surface of the cable shoe 11, whereupon it is lifted anew and the electric arc 26 is restarted. This procedure is repeated a number of times until the electric arc 26 is ignited. Graph 6 of the drawing shows an output interruption with a corresponding fall in temperature. When output is resumed, the brazing is completed. The total time is prolonged, owing both to the actual time loss during the interruption, and to the compensation for the fall in temperature during the interruption. This interrupt procedure prevents the loss of material and energy that would be the result of a failed, interrupted brazing. Furthermore, the additional work effort of removing the connection and re-grinding the base material is avoided.

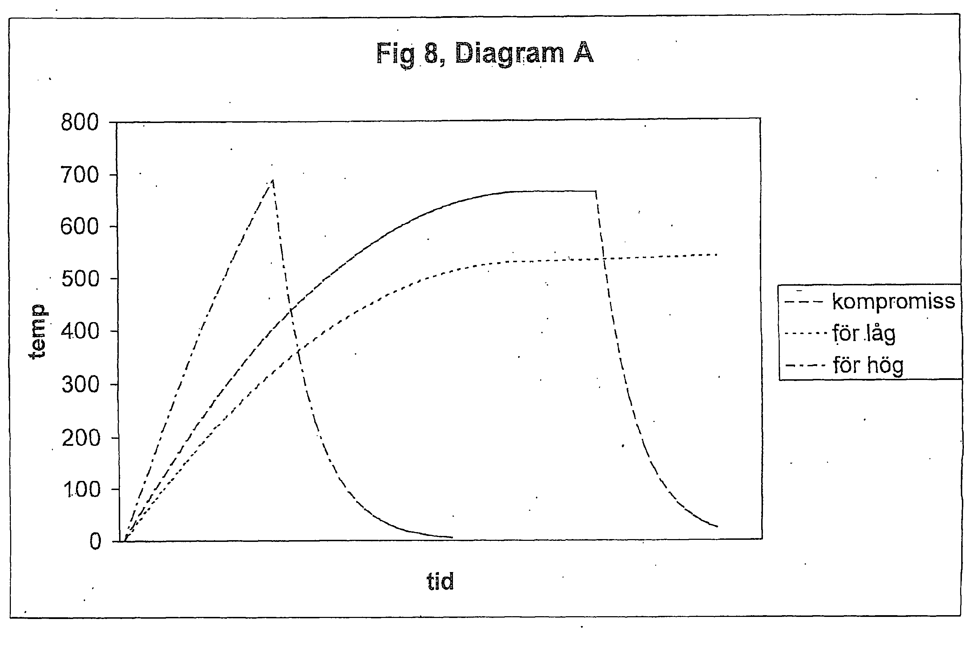

Figure 8 shows in principle how different power levels, in the use of prior art, makes the temperature of the braze joint change, and shows that a compromise between, on the one hand, brazing temperature accuracy, and, on the other hand, time and energy consumption, for a brazing are necessary in order to complete a brazing. At too high power and too short time periods, the inaccuracy of the brazing temperature is too high because of variations in included parts, in the process and the handling by the operator. Too low power yields either unmanageably long brazing-process times or a stable final temperature below desirable brazing temperature.

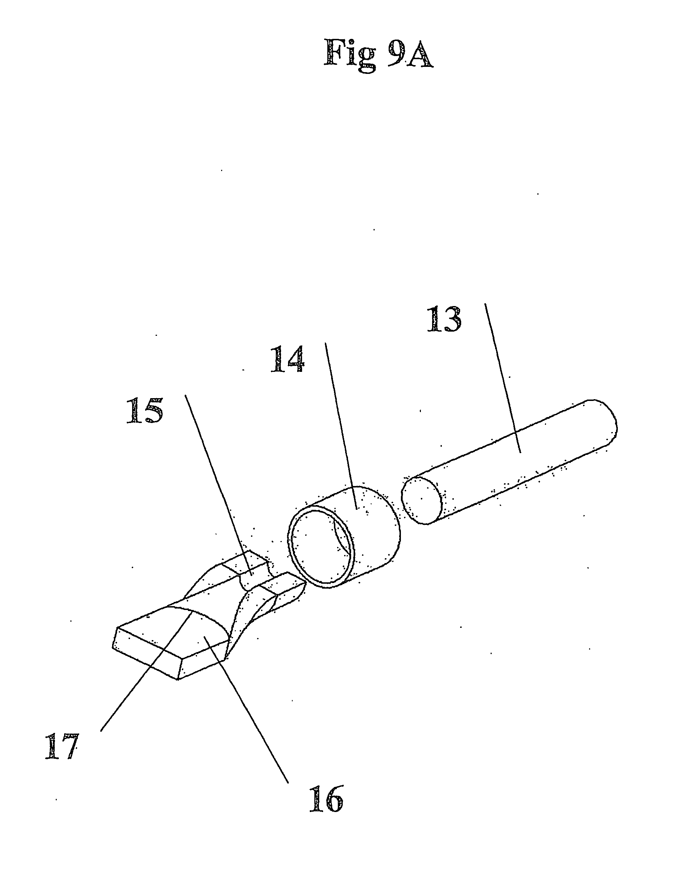

Figure 9A shows the components included in an electrically conductive connecting piece 11 excluding the brazing clip, and a cable or a thread 13 can be seen which is to be inserted into a ring 14, and from the other direction, an end portion 15 is inserted into the ring 14. The end portion 15 is made of a rectangular compact piece which has been formed and which also has a flat portion 16 on which the electric arc 26 in the brazing process is working. The border between the flat portion and the formed portion is semicircular and comprises a raised guiding edge 17. This semicircular form is adapted to a guard ring 21 in the brazing gun 7.

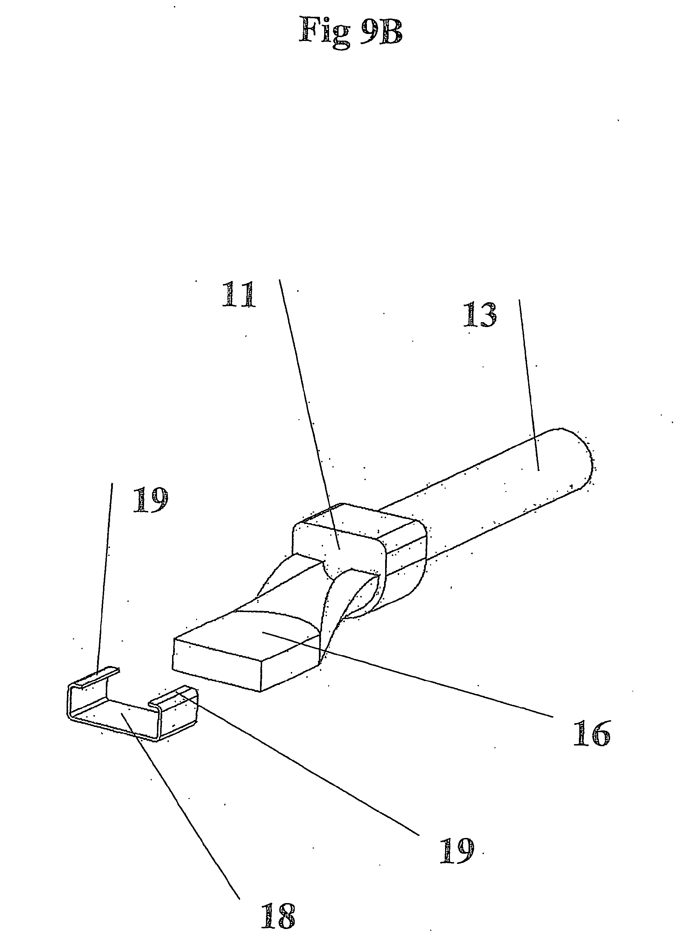

Figure 9B shows an electrically conductive connecting piece 11 in the form of a cable shoe and a brazing clip 18 with two clamping tabs 19, where this brazing clip 18 is to be slipped onto the flat portion 16 of the cable shoe 11. Because the new process is so fast, no substantial oxidation will be formed on the connecting piece's 11 bottom surface or on the filler material before a metallic connection takes place. No flux between the filler 18 and the electrically conductive connecting piece 11 is needed. There is no need to make any holes in the bottom surface of the brazing clip when manufacturing. A thread or a cable 13 can also be seen. Thanks to the arrangement with two depressed clamping tabs instead of one, the brazing clip is more securely fastened. Therefore, no holes are needed on the top surface of the brazing clip. At the same time, this arrangement caters for conservation of material.

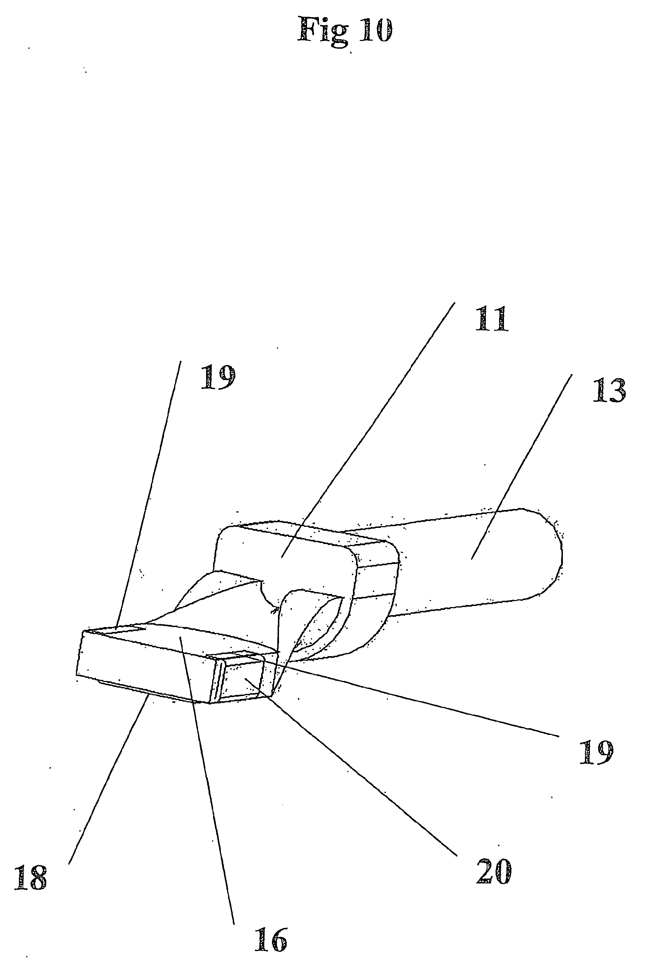

Figure 10 shows the electrically conductive connecting piece 11 in the form of a cable shoe with the clamping tabs 19 of a brazing clip 18 pressed into the flat portion 16 while the short sides 20 of the brazing clip 18 are outside the flat portion 16. No holes are needed on the top surface of the brazing clip 18 because the brazing clip 18 is now locked with dual clamping tabs 19. Also, larger and more heavy-duty connecting pieces 11 of electrically conductive material can now be used, as well as cables or threads 13 of larger diameter.

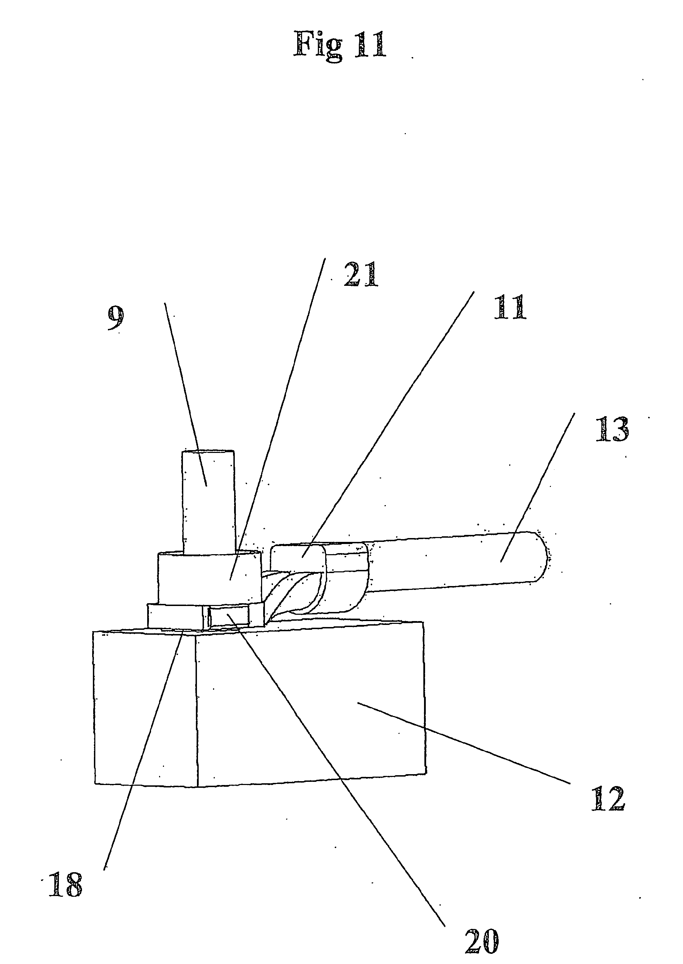

Figure 11 shows how the carbon electrode 9 with a guard ring 21 from the brazing gun 7 works on an electrically conductive connecting piece 11 in the form of a cable shoe and the operator by pressure secures the cable shoe 11 via the guard ring 21 onto the workpiece 12. The bottom of the brazing clip 18 and its short side 20 can also be seen.

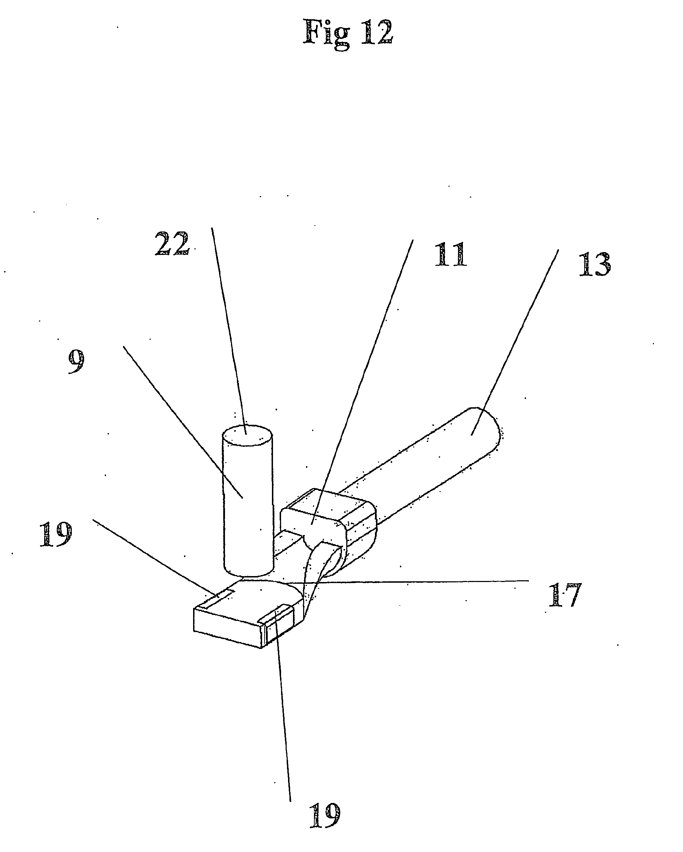

Figure 12 shows how a carbon electrode 9 is moved towards an electrically conductive connecting piece 11 in the form of a cable shoe, and the semicircular raised edge 17 can be seen, which is adapted to the guard ring 21. It can be seen that the clamping tabs 19 of the brazing clip 18 are pressed down into the flat portion 16, which happens already in manufacturing. Furthermore, the surface area of the carbon electrode 9 is impregnated with an oil-based product, for example, paraffin wax, petroleum jelly or similar. During the brazing process, this impregnation forms a gas that protects the electric arc. The electric arc can then more easily and safely be ignited in the brazing process and maintained so that it does not go out during the brazing process.

The end surfaces 22 of the electrode are, however, not impregnated. Therefore, in the starting moment when the electric arc is created, no energy is unnecessarily lost because of heating and gasification of the impregnator from the end surfaces 22. This is important since it is desirable, initially in the brazing process, to raise the surface temperature of the electrically conductive connecting piece 11 as fast as possible. An initial high temperature reduces the risk of the carbon layer 27 later in the brazing process coming loose from the supporting surface and interfering with the electric arc 26.

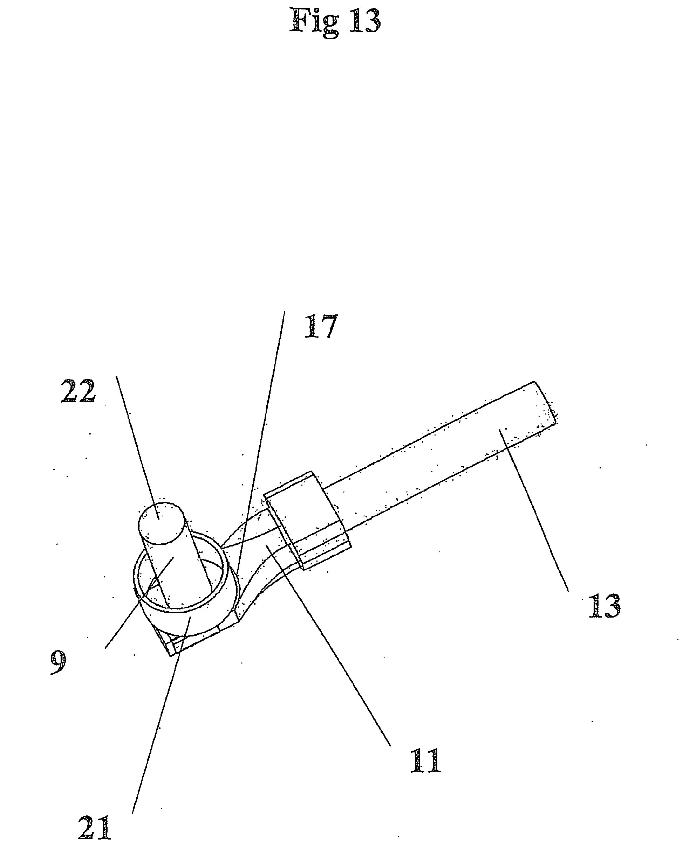

Figure 13 shows how a carbon electrode 9 together with the guard ring 21 are moved towards an electrically conductive connecting piece 11 in the form of a cable shoe and where the guard ring 21 fits into the semicircular raised edge 17.

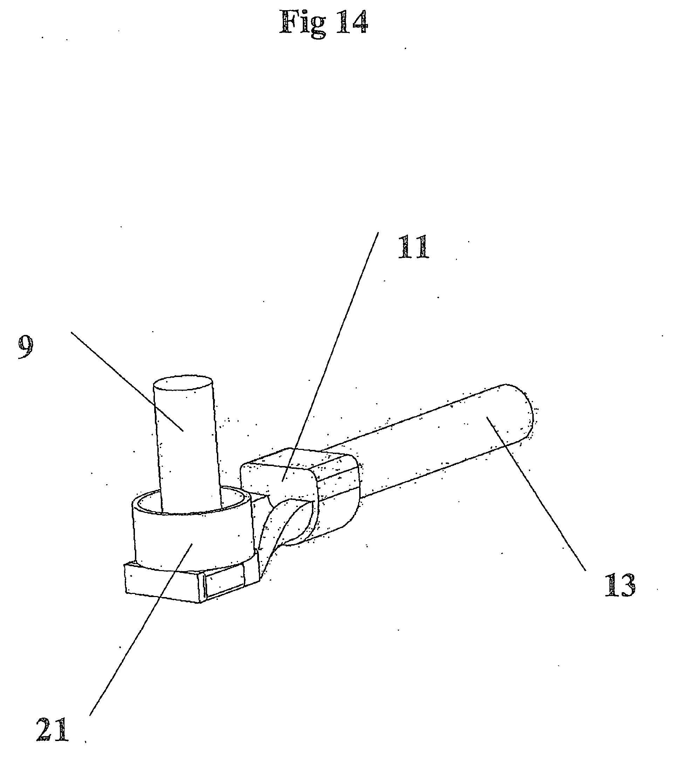

Figure 14 shows a guard ring 21 from the brazing gun 7. The guard ring 21 is connected to earth in the electric circuit. It can be seen how the carbon electrode 9 and the guard ring 21 are dressed down against the cable shoe 11, and the latter is earthed before the brazing process starts.

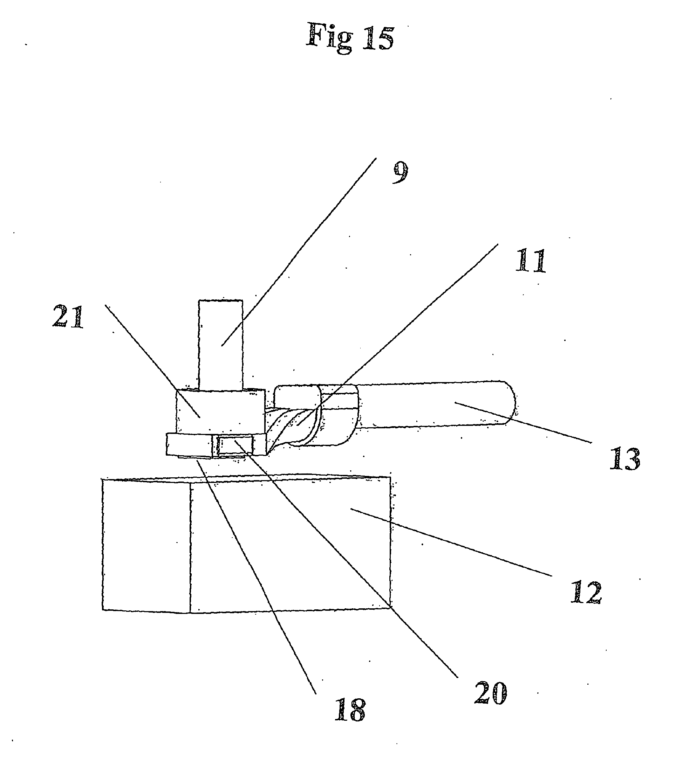

Figure 15 shows the electrically conductive connecting piece 11 in the form of a cable shoe, and from the brazing gun 7 the carbon electrode 9 is pressed, together with the guard ring 21, down against the cable shoe 11, and the bottom of the brazing clip 13 and its short side 20 can be seen, and everything is pressed down against the workpiece 12.

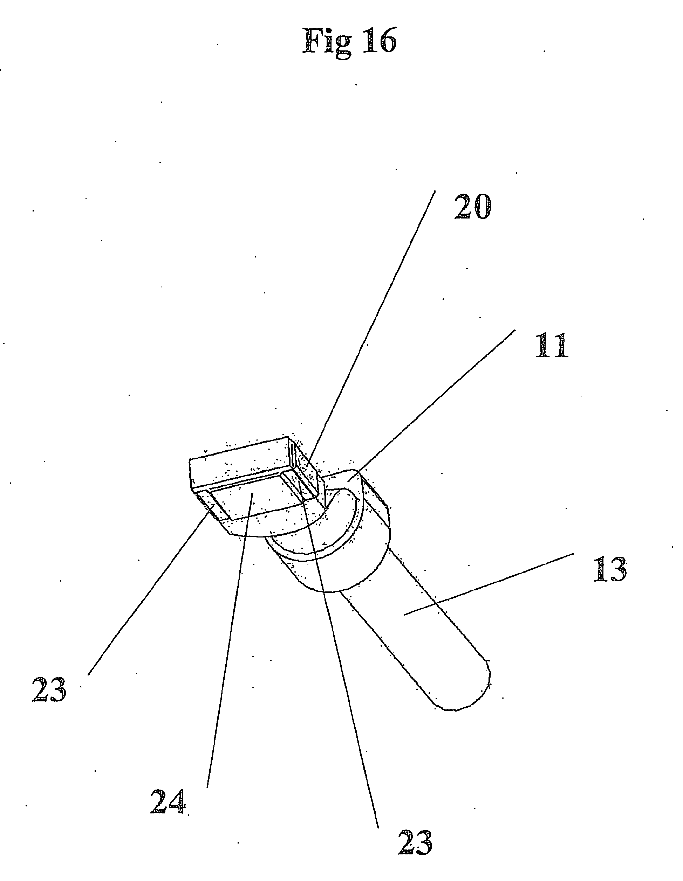

Figure 16 shows the bottom of an electrically conductive connecting piece 11 in the form of a cable shoe with a brazing clip 18 where the side edges 23 of its bottom are pressed into the cable shoe 11 to secure the clip 18, and its lower middle portion 24 is placed outside of the connecting piece 11 so that it can melt out during the brazing process and form a braze joint.

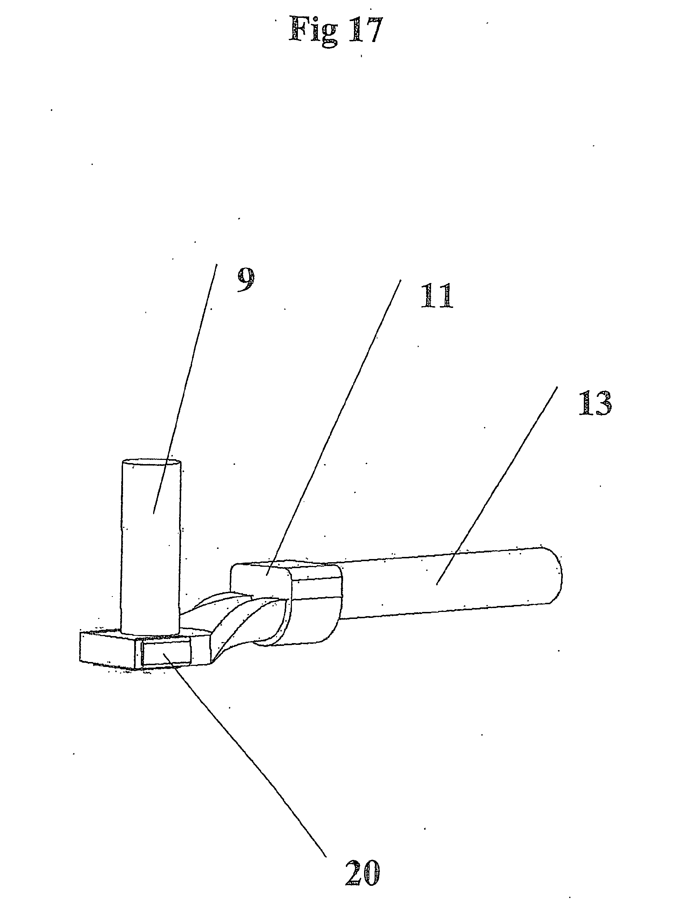

Figure 17 shows what happens in the brazing process regarding polarity. The brazing gun 7 with the carbon electrode 9 is moved directly towards the connecting piece 11. When voltage is later applied, the carbon will be the positive pole and the cable shoe will be the negative pole. These two get opposite polarity; in some cases, the reverse polarity is chosen.

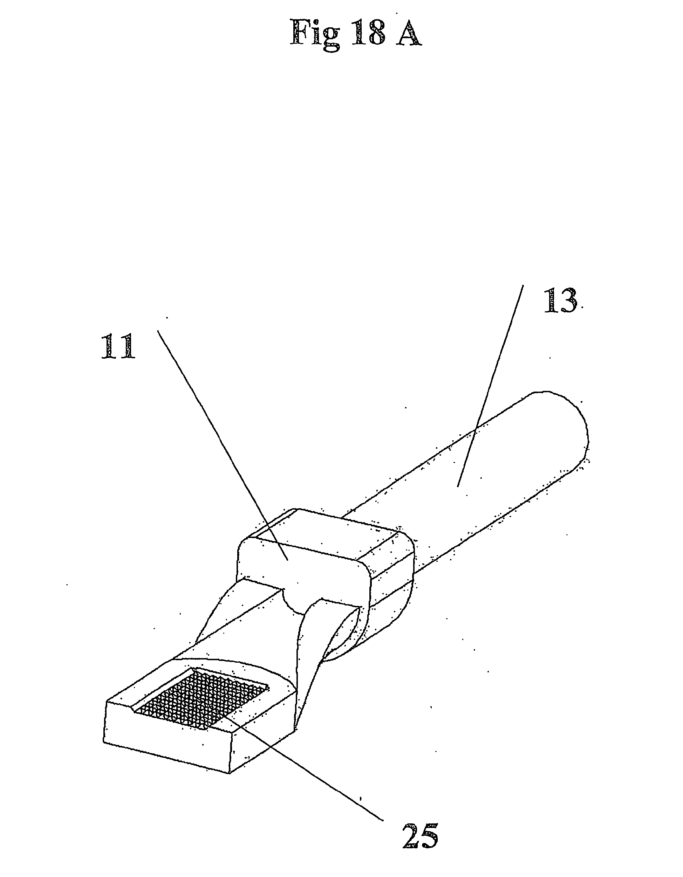

Figure 18A shows a knurled connecting piece 11, and the knurling 25 on the top surface 16 of the cable shoe's 11 can be seen. The cable shoe 11 can also be blasted and/or provided with cavities. The energy feed in the brazing process is also further reduced by the electrically conductive connecting piece 11 being knurled and/or blasted. Heat is transferred from an electric arc to a carbon layer 27 on the top surface 16 of the connecting piece 11, which surface was released from the carbon electrode 9 in the brazing gun 7. Afterwards, the heat descends to the surface of the connecting piece 11 of electrically conductive material. By this surface being knurled 25 and/or blasted or exposed to other surface-modifying treatment, a larger interfacing surface is formed as compared to a smooth surface, which results in a faster absorption of energy and consequently heating of the electrically conductive connecting piece 11. That way, the energy feed can be reduced while the brazing result is maintained.

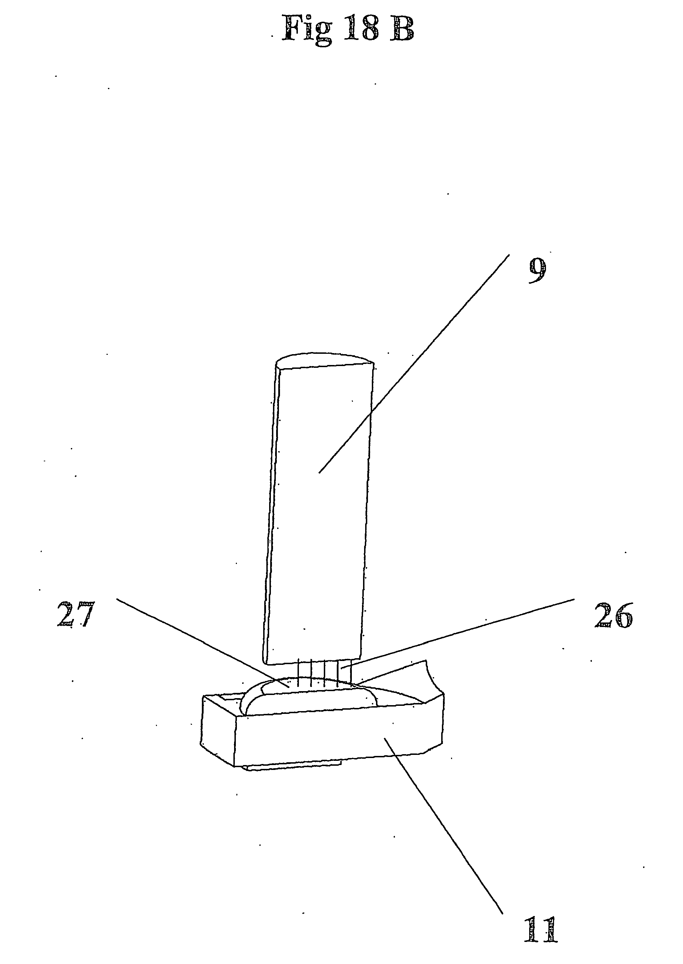

Figure 18B shows a schematic cross-section of an electric arc 26 between carbon electrode 9 and cable shoe 11. Via the electric arc 26 material is transported from the carbon electrode 9, which settles as a carbon layer 27 on the cable shoe 11. The carbon layer's 27 tendency to come loose from the supporting surface is mainly determined by three factors, namely:
1. The temperature of the supporting surface during the initial phase of the brazing process.
2. The structure and geometric shape of the supporting surface.
3. The thickness of the carbon layer 26.

The tendency to come loose increases when brazing more heavy-duty connections 11, for example, cable shoes of a greater mass where more energy is required to obtain a good brazing. By the use of the knurling or blasting described in Figure 18A, the carbon layer's bond strength is improved. With the appropriate formula together with the above-mentioned knurling/blasting, a high initial temperature can be reached, which has a positive effect on the bond strength.

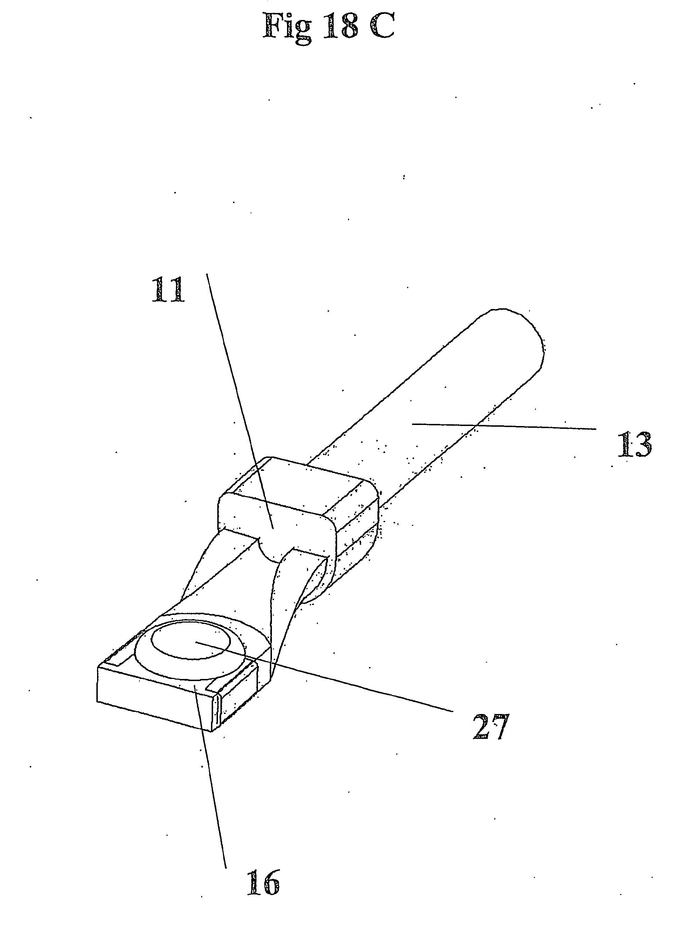

Figure 18C shows a picture of a cable shoe 11 from above with a carbon layer 27 located on the top surface 16.

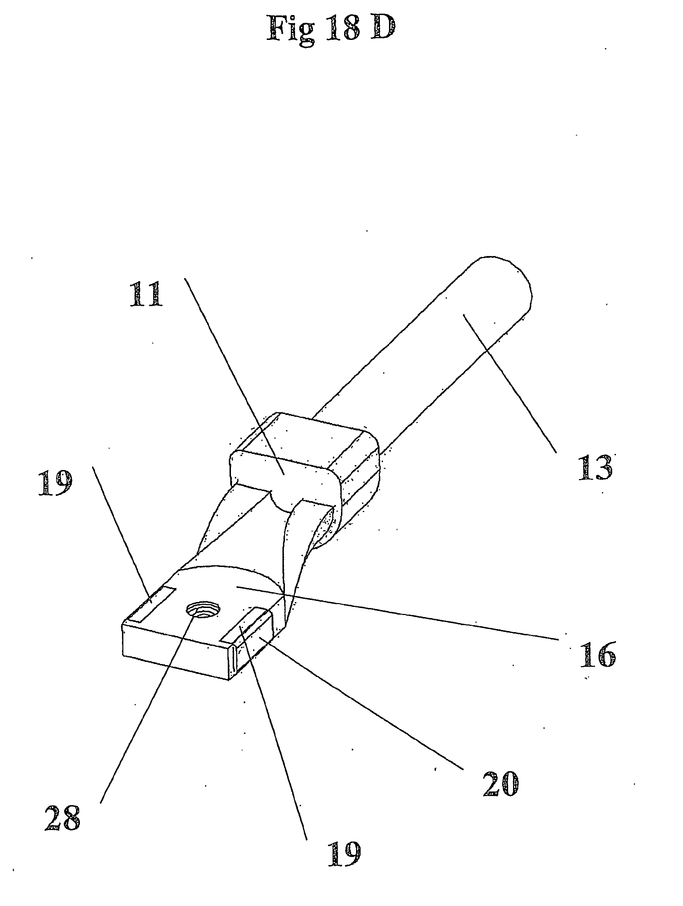

Figure 18D shows a cable shoe 11 with a cavity 28 on the top surface 16. To further improve the carbon layer's 27 bond strength, the cable shoe 11 is provided with one or a few cavities 28 in the top surface of its flat portion 16.

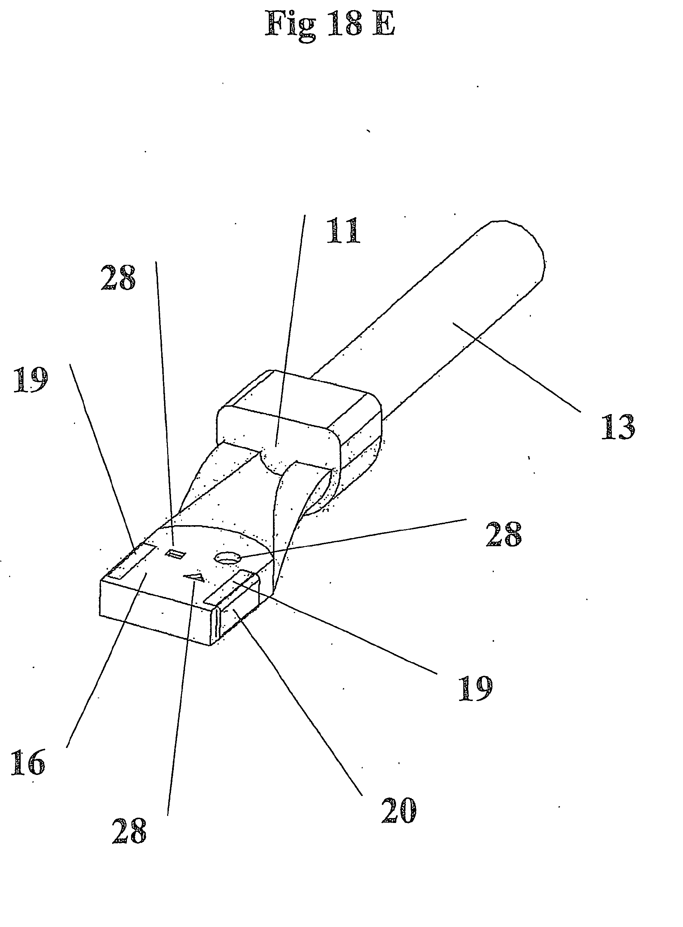

Figure 18E shows variants of the cavity 28 as regards shape, number and position on the cable shoe's 11 flat portion 16.

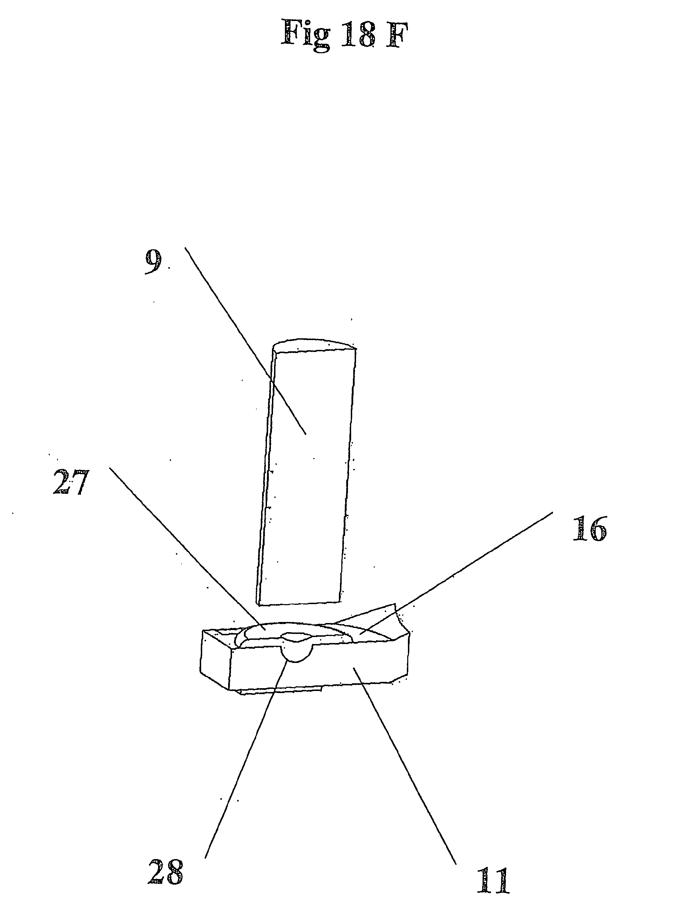

Figure 18F shows the effect of the cavity on the thickness and geometric shape of the released carbon layer 27. In order to reduce the carbon layer's 27 thickness, the cable shoe 11 is provided with one or a few cavities 28, adapted in size and shape so that a satisfactory reduction of the carbon layer's 27 thickness in the adjacent area is achieved when the cavity 28 absorbs carbon composition from the environment, which, in other cases would have resulted in a thicker carbon layer 27. The cavity and/or the cavities 28 also act geometrically as anchoring points for the carbon layer 27, which increases the bond strength.

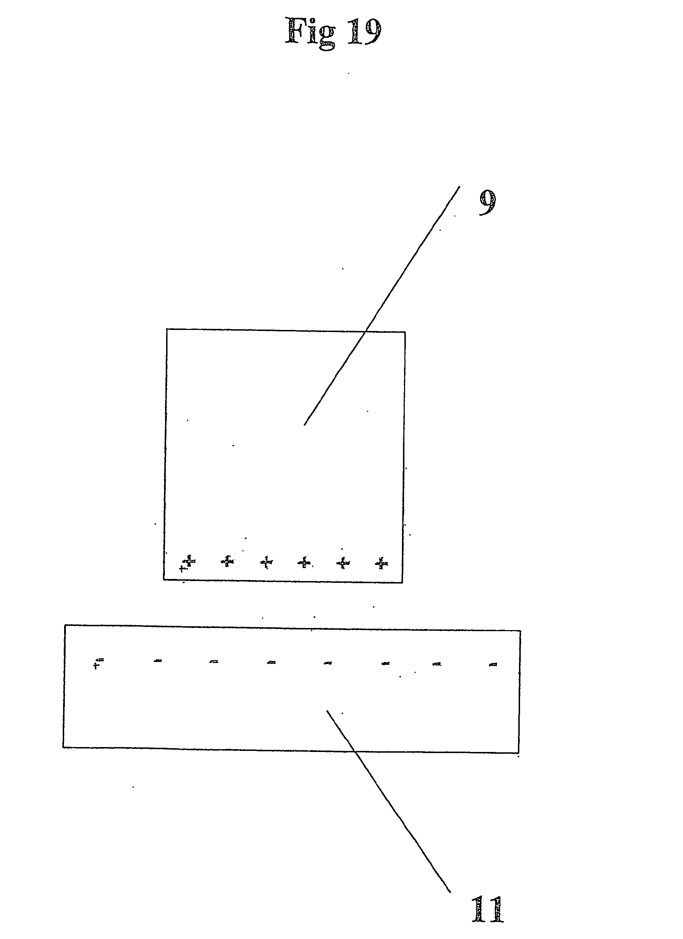

Figure 19 shows the polarisation of a brazing process according to previous methods. A smooth surface reflects heat, which is why increased heat losses occur, and consequently an increase in the current or the energy consumption. The brazing process will take more time and consequently allows greater heat loss through heat conduction and consequently further increases the current or energy consumption. The drawing also schematically shows an even distribution of electrons and electron holes.

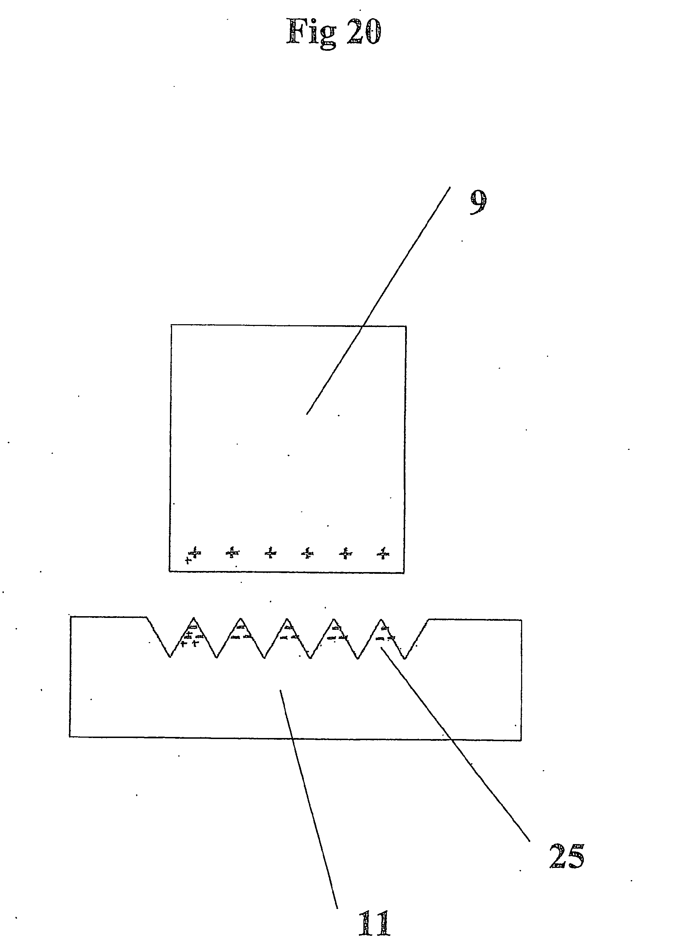

Figure 20 shows the polarisation of the present brazing process with a knurled connecting piece 11 of electrically conductive material. Thanks to a knurling 25 and/or blasting or other surface-enlarging treatment, a larger interfacing surface is created as compared to a smooth surface, which results in faster absorption of energy and consequently heating of the electrically conductive connecting piece 11. The energy feed can thus be reduced without degradation of the brazing result. Heat losses via heat conduction are reduced further because of the fast brazing process. The uneven surface results in the electron concentration occurring in local peaks, which facilitates for the electric arc to be ignited and maintained.

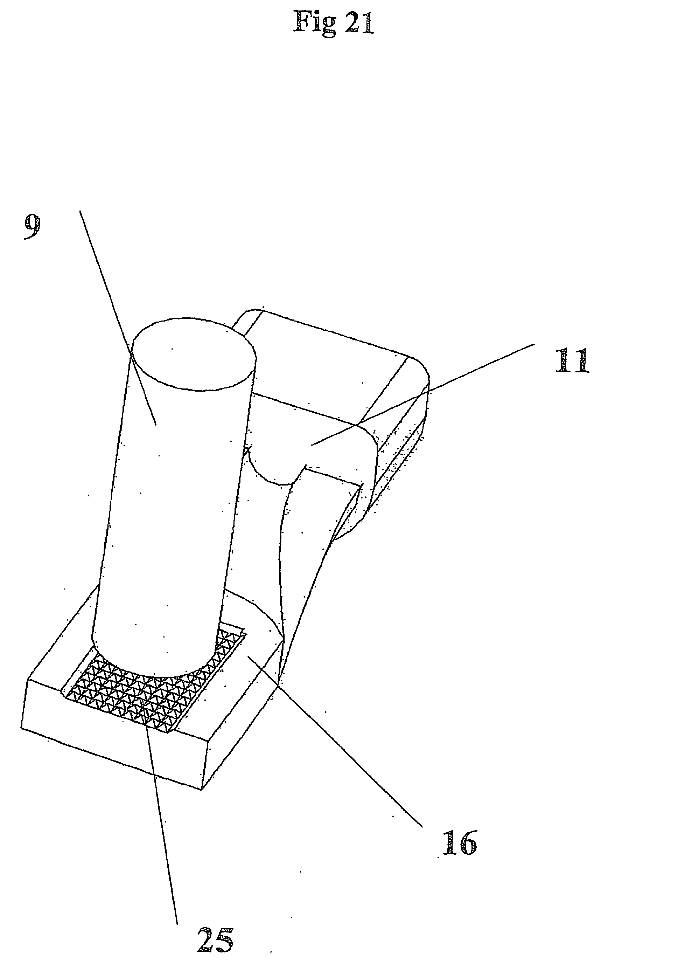

Figure 21 shows an impregnated carbon electrode 9 which is moved towards a knurled connecting piece 11 of electrically conductive material. During the brazing process, the impregnation of the carbon electrode's 9 surface area protects the electric arc 26, and the cable shoe's 11 knurled surface 25 leads to a larger interfacing surface area, and thus the energy absorption takes place in a shorter time period, but the desired temperature is fully reached and energy feed during the brazing process can be interrupted at an earlier stage.

Consequently, energy is conserved and the battery 1 can be used for more brazings before recharging is necessary.

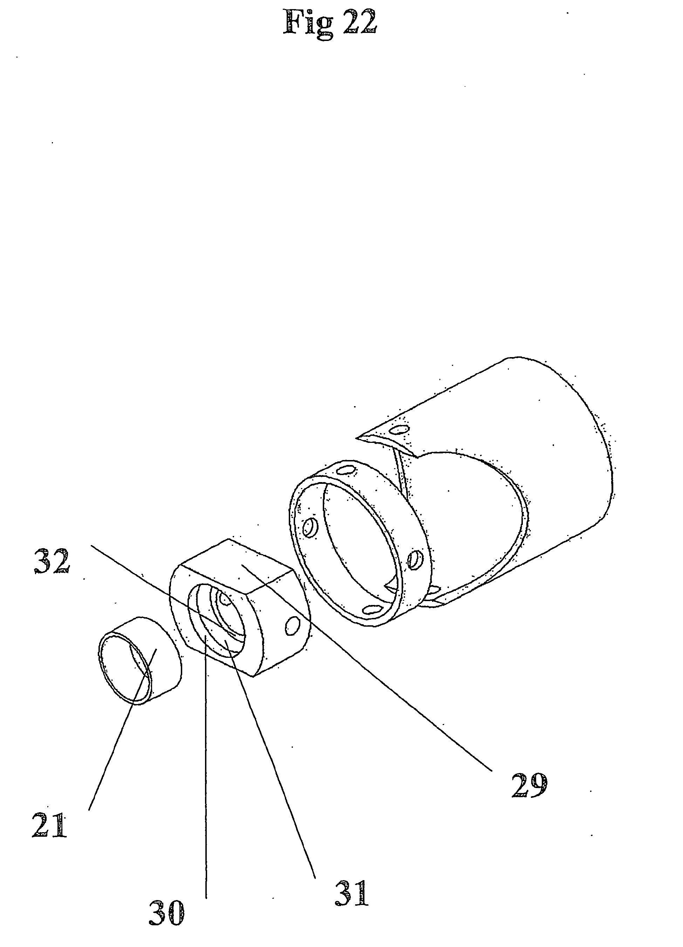

Figure 22 shows the principal parts included in a gyro. On the outer edge of the brazing gun is the carbon electrode 9 and it passes through a guard ring 21. In pin brazing according to previous methods, it has been important, when the gun is pressed down against the connecting piece 11, that the guard ring 21 has been in flat contact with the connecting piece 11. This has been one of the operator's main problems. The gyro of the brazing gun 7 solves this problem. The guard ring 21 is inserted into the ring holder 29 and is manoeuvred in through the cylindrical portion 30 in the ring holder 29 and is stopped by a conical portion 31 inside the cylindrical portion 30. Furthermore, there is a stop ledge 32 which comprises an extra protective measure for the guard ring 21. The ring holder 29 with its included parts is then inserted into a cylindrical movable middle portion 33 of the suspension device, which, in turn, is linked together with a fixed joint 34 which is joined with the brazing gun 7.

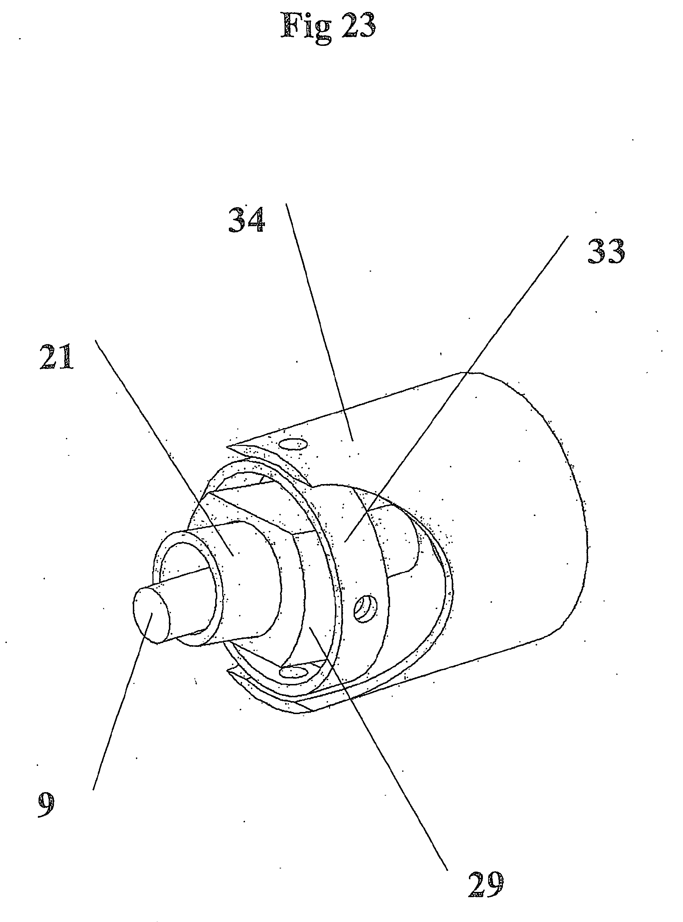

Figure 23 shows a picture of a gyro when the brazing gun 7 is tilted. The spring-loaded carbon electrode 9 can be seen when it is in its outermost position, along with the guard ring 21 which is inserted into the ring holder 29 which is secured in a cylindrical, movable middle portion 33, which is linked together with a fixed joint 34 which is joined with the brazing gun 7.

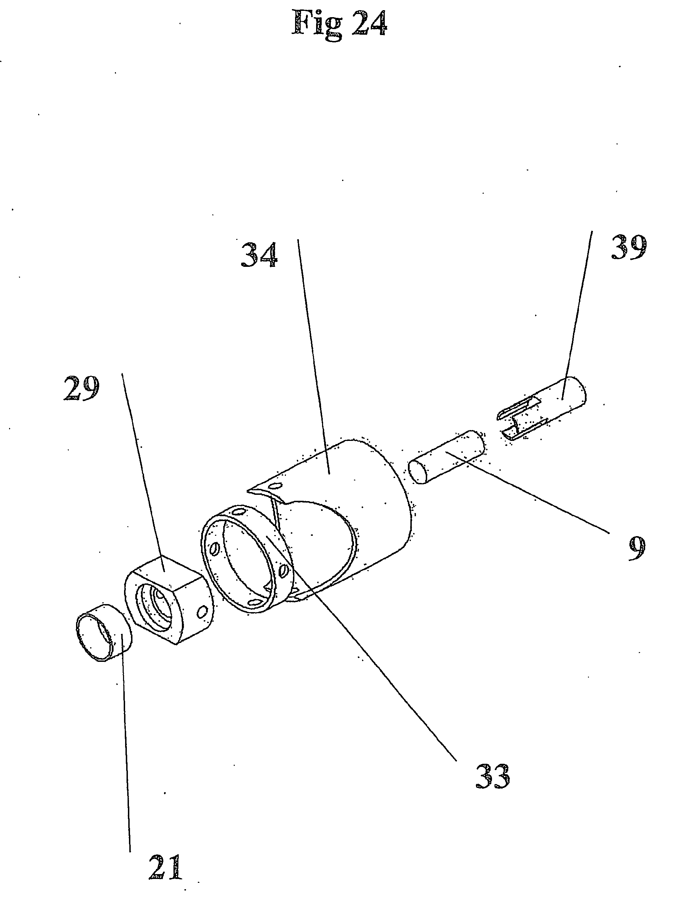

Figure 24 shows the principal details included in a gyro. An electrode holder 39 can be seen where the carbon electrode 9 is to be inserted, and these are then passed through fixed joint 34 joined with the brazing gun 7, and a cylindrical, movable middle portion 33 and a ring holder 29 and a guard ring 21.

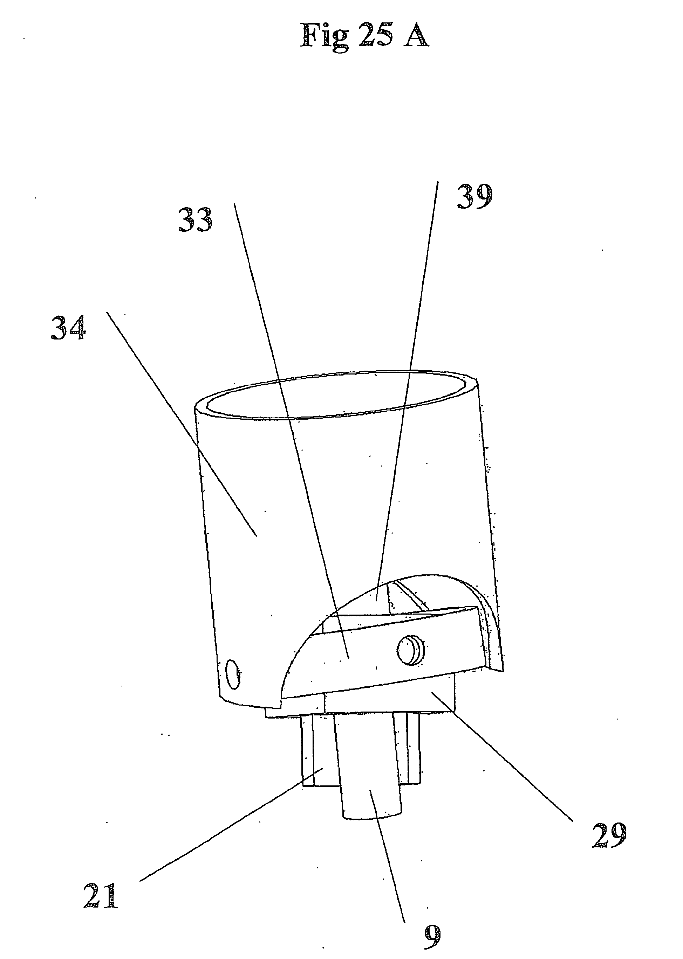

Figure 25A shows a gyro device partially in cross-section in a tilted position with a carbon electrode 9 secured in the electrode holder 39 where these are angularly locked in relation to the gun 7 and consequently also the fixed portion 34 of the gyro. The different parts of the gyro co-operate to prevent the carbon electrode 9 from coming into contact with the guard ring 21 when tilted. The movable cylindrical middle portion 33 and the fixed portion 34 can also be seen.

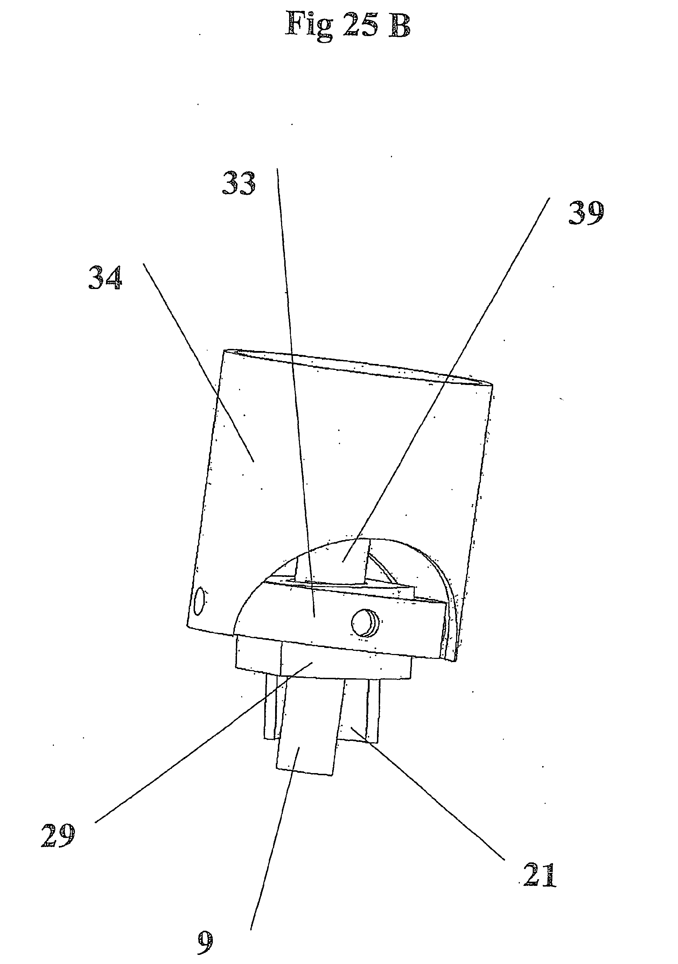

Figure 25B shows a mounted gyro partially in cross-section with a carbon electrode 9 secured in the electrode holder 39. The guard ring 21 is movable in relation to the brazing gun 7 and the fixed portion 34. The ring holder 29 and the cylindrical, movable middle portion 33 and the fixed portion 34, that is, the gyro suspension itself, allows the angle of the guard ring 21 to be varied in relation to the brazing gun 7 and the fixed portion 34.

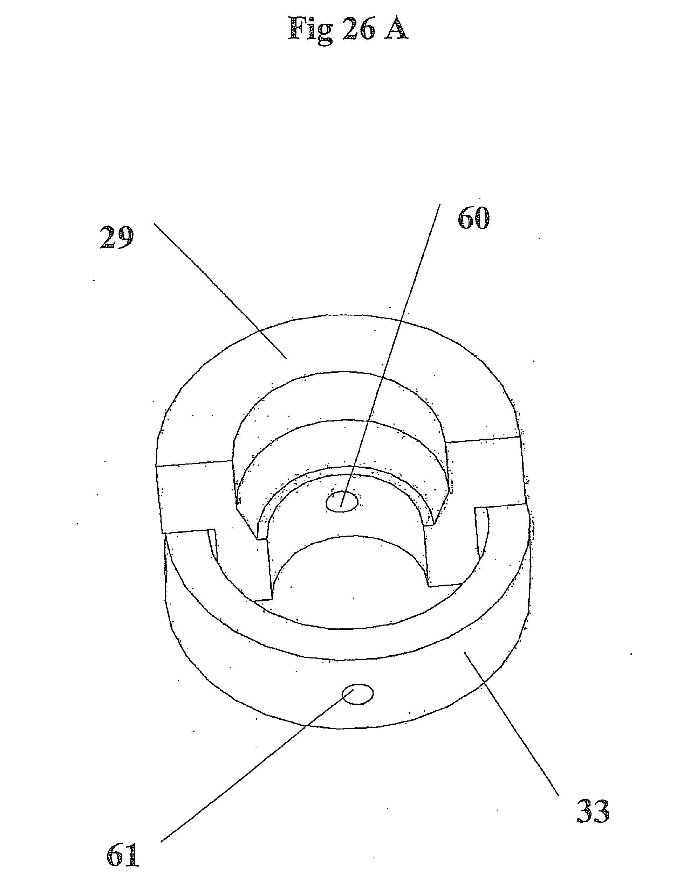

Figure 26A shows a ring holder 29 in cross-section, inserted into an intermediate ring 33. The ring holder 29 and the intermediate ring 33 are rotatably secured to each other around an imaginary first axis extending through the hole 60 of the ring holder and the hole 61 of the intermediate ring.

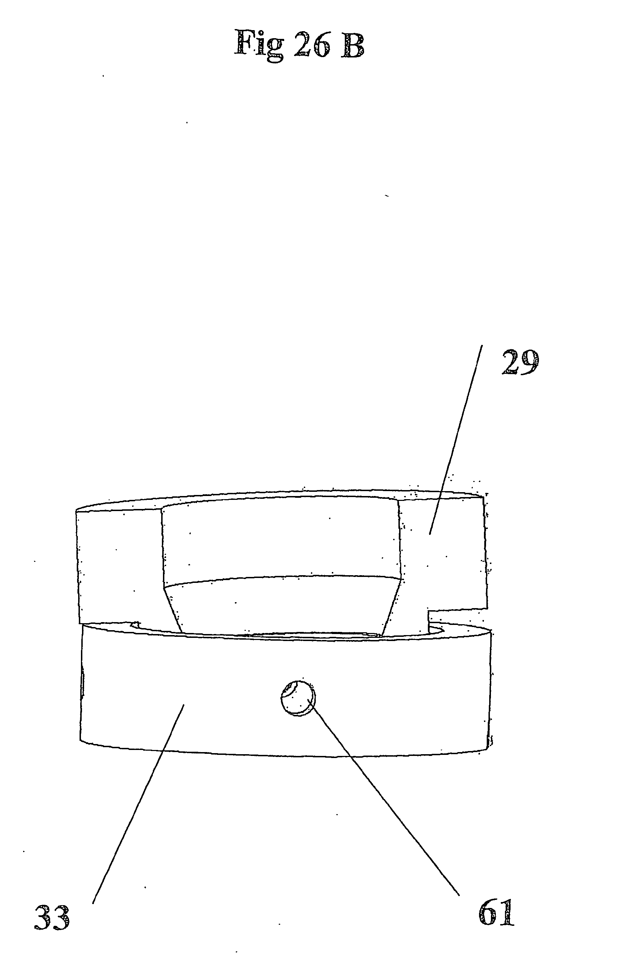

Figure 26B is another view of the same parts, where it can be more clearly seen that the angle between the central axes of the ring holder 29 and the intermediate ring 33 cannot exceed a set value because the details then interfere with each other. The motion of the ring holder 29 in relation to the intermediate ring 33 is limited.

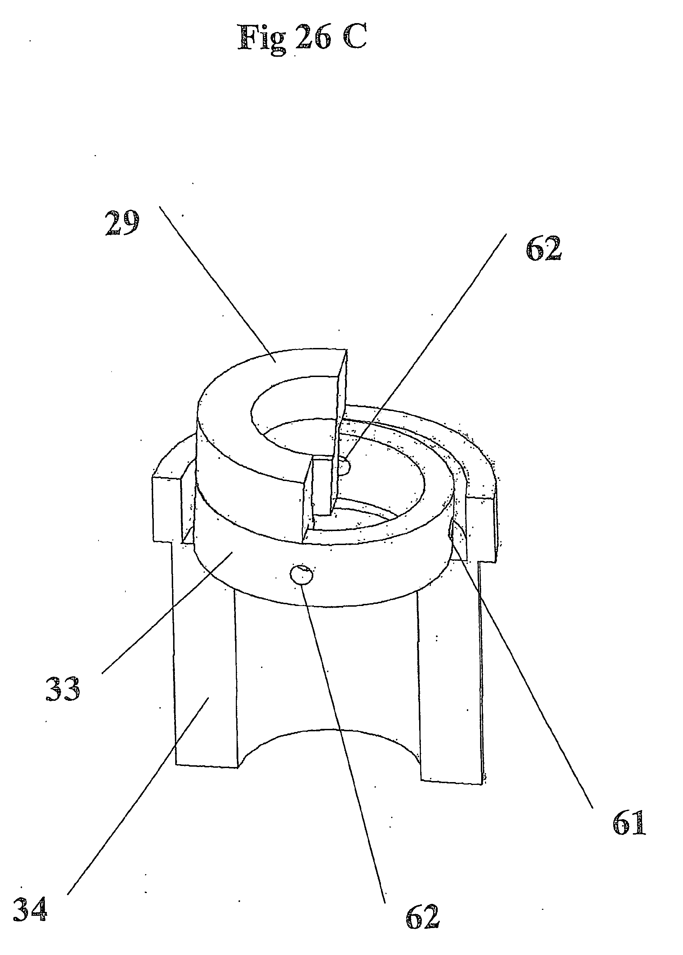

Figure 26C shows partially in cross-section how ring holder 29 and intermediate ring 33 are joined with a fixed joint 34. The intermediate ring 33 is rotatably secured into the fixed joint 34 around an imaginary other axis extending through the hole 63 of the fixed joint 34 and the hole 62 of the intermediate ring 33. This imaginary other axis is not parallel to the first imaginary axis, and does not need to be in the same plane.

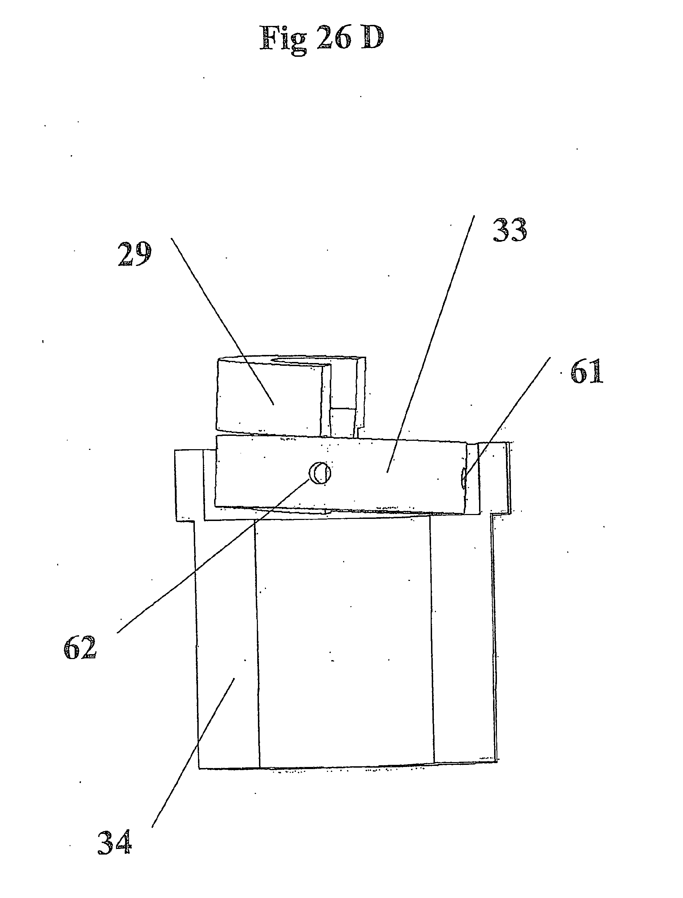

Figure 26D is another view of the same parts, where it can be more clearly seen that the angle between the central axes of the intermediate ring 33 and the fixed joint 34 cannot exceed a set value because the details then interfere with each other. The motion of the intermediate ring 33 in relation to the fixed joint 34 is limited.

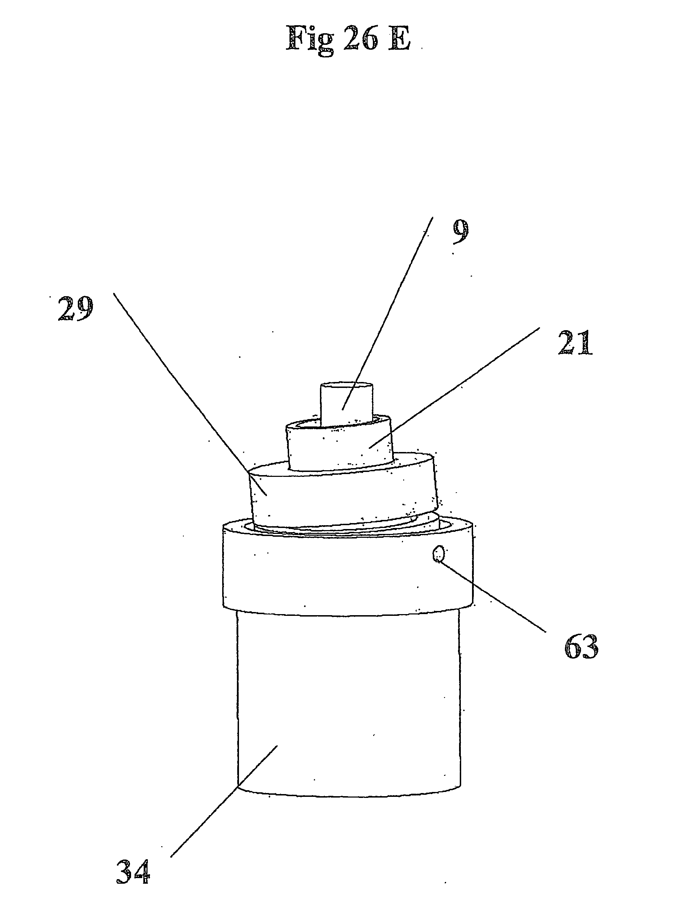

Figure 26E shows a complete gyro link including a carbon electrode 9 and a guard ring 21. The suspension of the guard ring 21 in the fixed joint 34 by way of the ring holder 29 and the intermediate ring 33 allows its central axis to assume a deviating angle and/or direction in relation to the carbon electrode's 9 central axis. The size of this deviation is limited by the geometry of the included parts in such a way that the guard ring 21 can never come into direct contact with the carbon electrode 9.

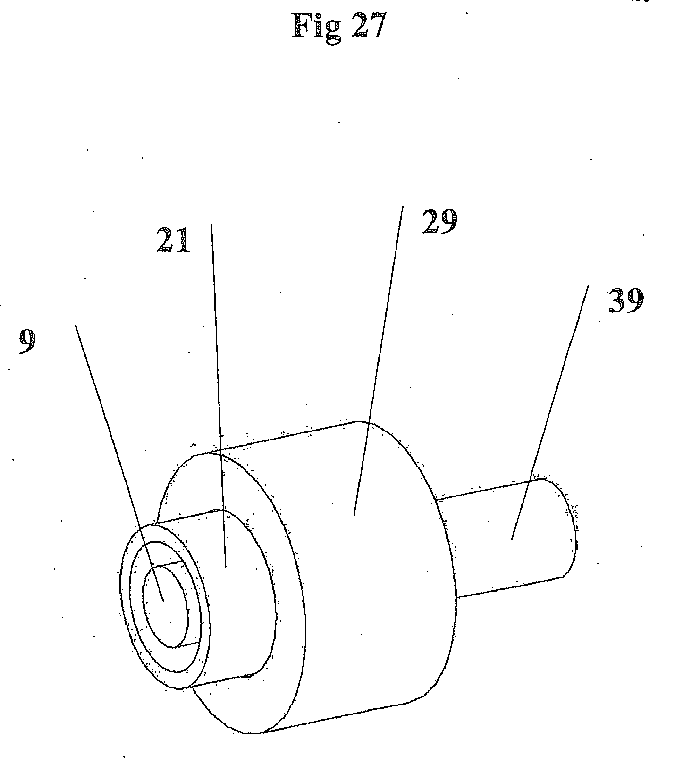

Figure 27 shows a mounted gyro with a carbon electrode 9 and a guard ring 21 before the start of the brazing process. The carbon electrode 9 is then positioned under the lower edge of the guard ring 21. These are the positions when the brazing gun 7 with its included parts is in contact with the electrically conductive connecting piece 11, for example, a cable shoe, before the gun 7 with the aid of the electromagnet 65 lifts the carbon electrode 9 and an electric arc 26 is created. The drawing then shows the entire ring holder 29 and the electrode holder 39.

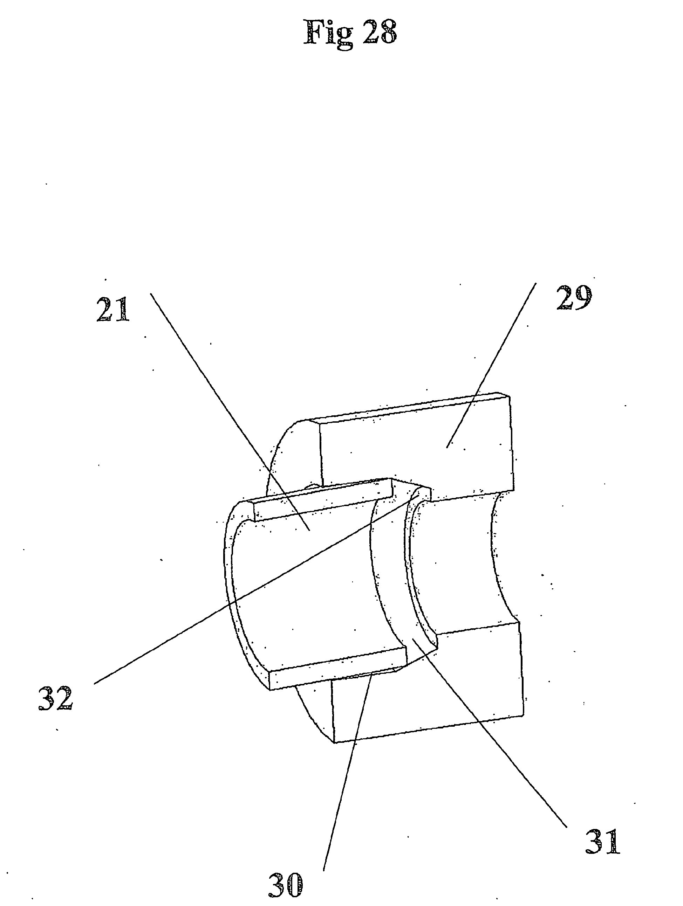

Figure 28 shows a cross-section of the ring holder 29 with a guard ring 21 mounted in a somewhat tilted position and inserted into the ring holder 29. In the ring holder 29 there is a cylindrical portion 30 which directs the guard ring 21 and prevents an excessive tilt of the guard ring 21 when mounting. The conical portion 31 of the ring holder 29 secures the guard ring 21 by clamping when the latter is inserted, even if it is tilted by the operator. Inside the conical portion 31 there is also an extra security device in the form of a stop ledge 32. The tilt-limiting cylindrical portion 30 of the ring holder 29 prevents an excessively tilted guard ring 21.

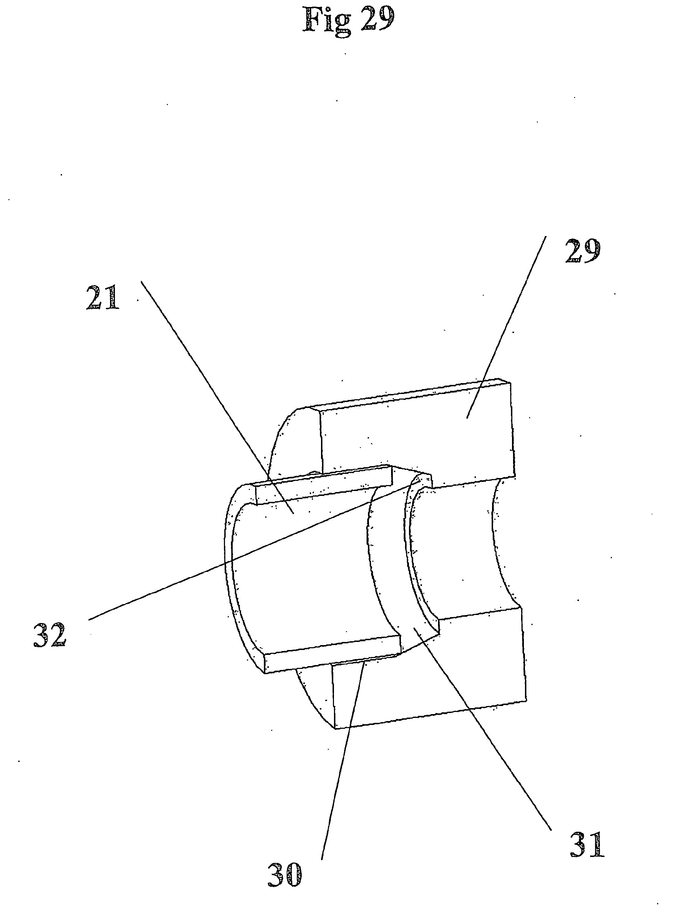

Figure 29 shows in cross-section the ring holder 29 with a guard ring 21 which is perpendicularly inserted into the ring holder 29 by way of the cylindrical portion 30 and which is secured against the conical portion 31, and inside the latter, as an extra security device, the stop ledge 32 is provided.

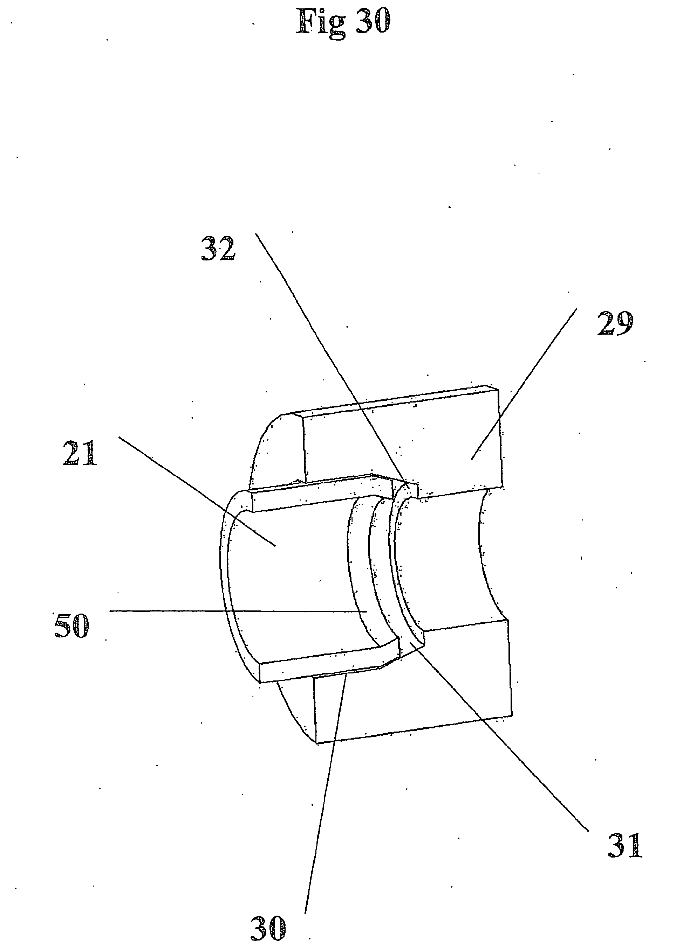

Figure 30 shows in cross-section the guard ring 21 in a ring holder 29 where the lower portion 50 of the guard ring 21 has been deformed by heat and pressure, and has been depressed and compressed against the conical portion 31 of the ring holder 29. The guard ring 29 with its included parts 30, 31 and 32 comprises a mechanical overheating protection. This situation occurs if the brazing process builds up surplus heat whereby the guard ring 21 is softened and, because of the operator's pressure on the brazing gun 7, the shape of the guard ring is transformed and it penetrates deeper into its conical seat 31, whereby the distance of the brazing gun 7 and the electrode 9 to, for example, the cable shoe 11, is reduced. With current maintained in the subprocess, this means reduced power build-up and the mechanical voltage surge protection is activated. With power maintained, the change of the electric arc's 26 resistance is detected by the electronics unit 2 which, in real time, corrects the formula for this.

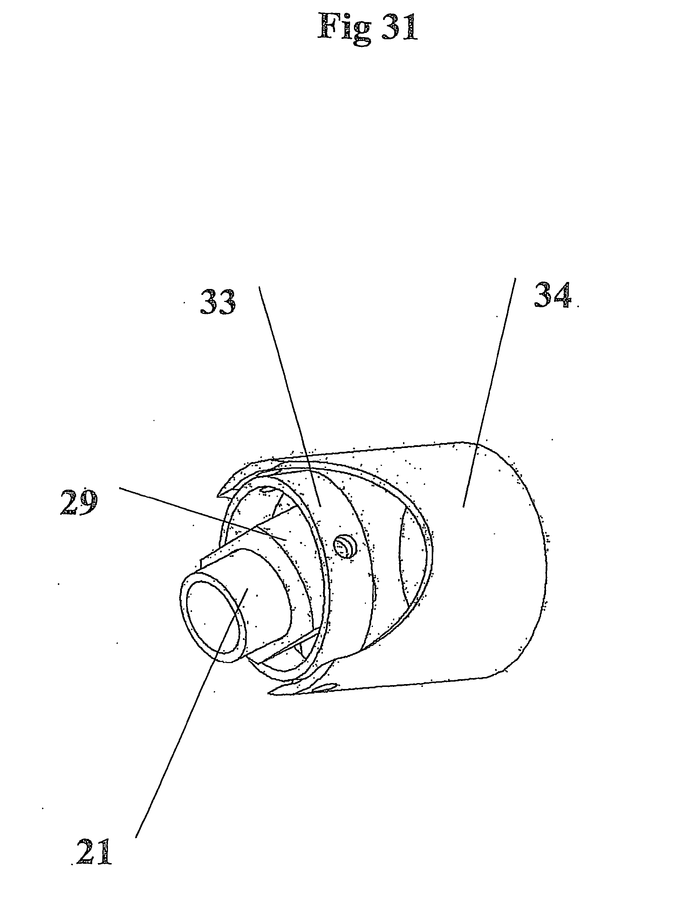

Figure 31 shows another view of a tilted gyro with a guard ring 21 inserted into the ring holder 29 which is placed inside the movable, cylindrical middle portion 33 which is placed in the fixed joint 34.

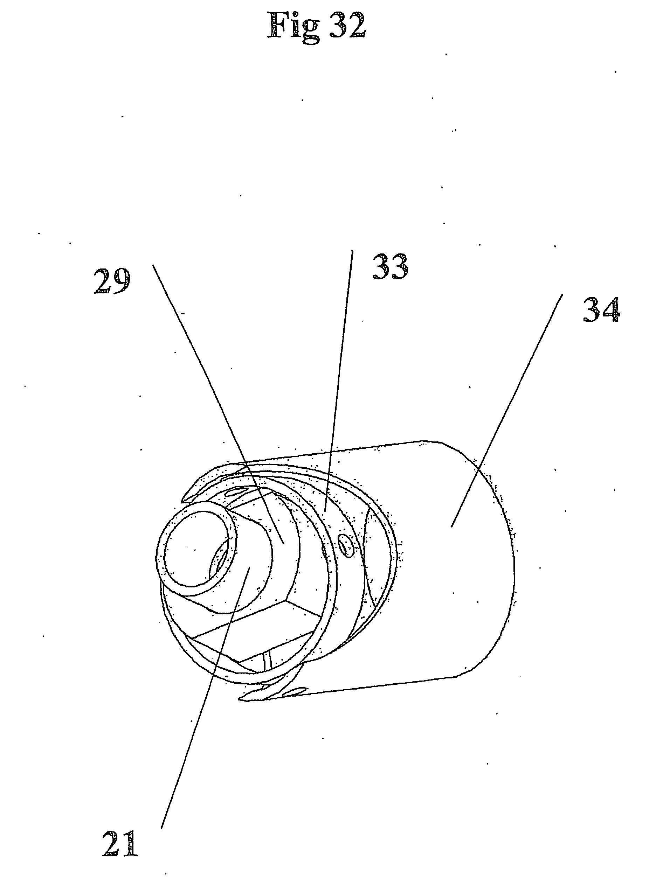

Figure 32 shows a view of the same gyro with another tilt angle and the principal included parts - the fixed joint 34, the middle portion 33 and the ring holder 29 are shown - and a guard ring 21 mounted in the ring holder 29. The gyro thus allows a tilt in all different directions and the carbon electrode 9 will never touch the guard ring 21.

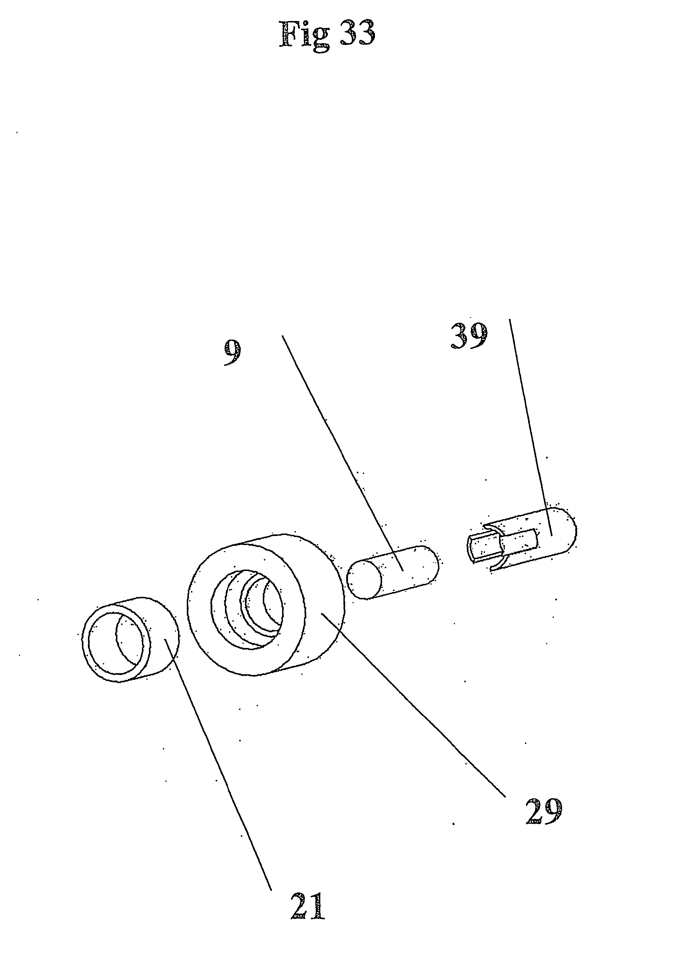

Figure 33 shows the parts included in the front portion of the brazing gun 7 against the connecting piece 11, and at the very end the guard ring 21 can be seen; then come the ring holder 29, the carbon electrode 9 and the electrode holder 39.

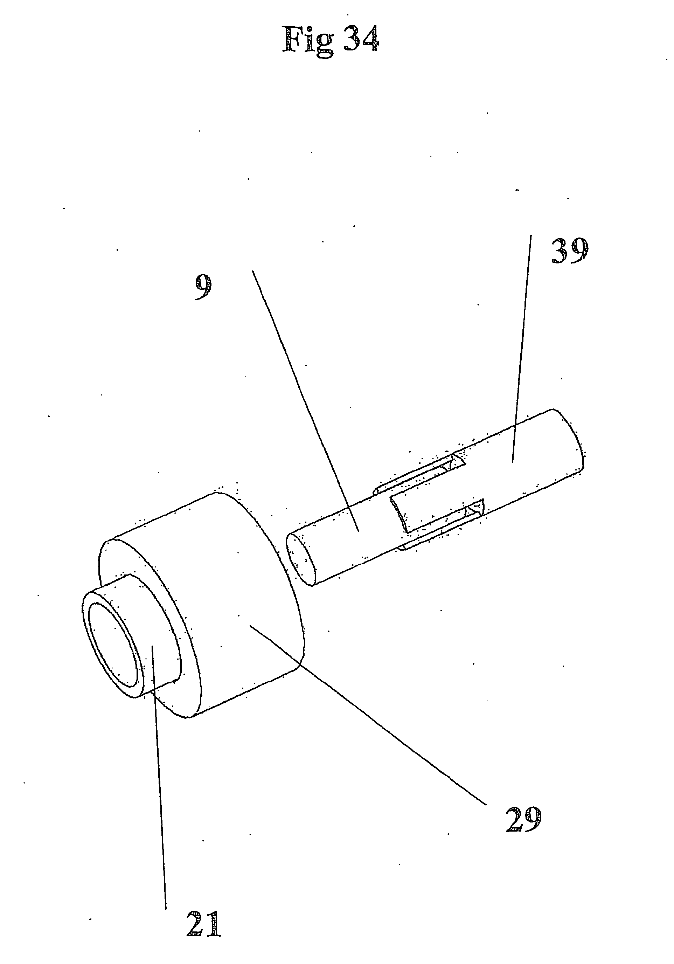

Figure 34 shows some parts mounted and the picture shows the guard ring 21 mounted in the ring holder 29 and the carbon electrode 9 being secured in the electrode holder 39.

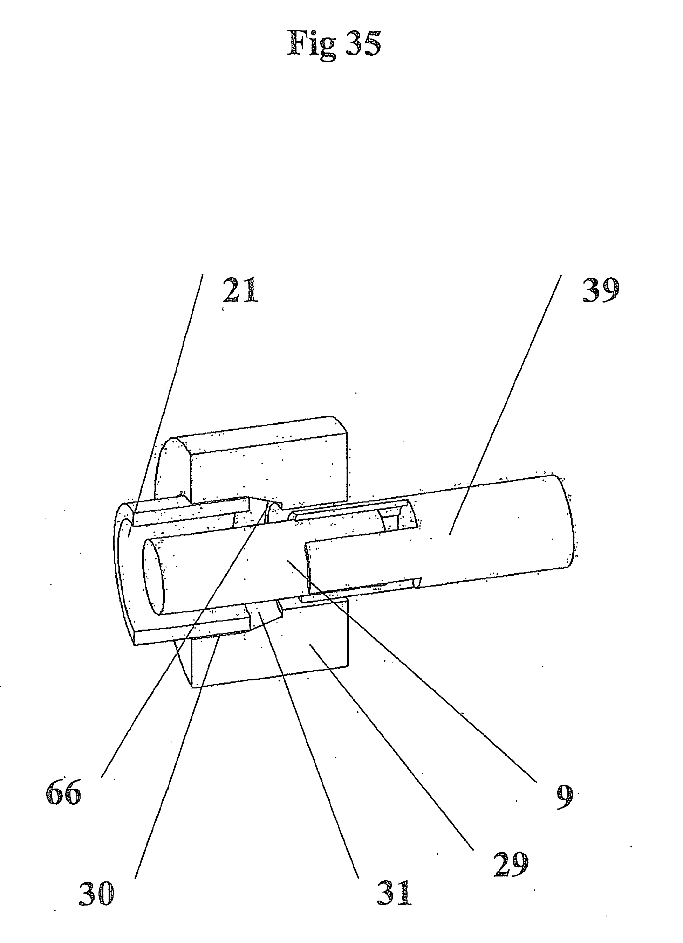

Figure 35 shows all the parts mounted, and some are shown in cross-section. The guard ring 21 is pulled into the cylindrical portion 30 of the ring holder 29 and is secured by pinching in the conical portion 31 of the ring holder 29. It can be seen how the guard ring 21 is in a somewhat tilted position in its lefthand portion in this cross-section view. The carbon electrode 9 is inserted into the electrode holder 39 and these are inserted into other parts.

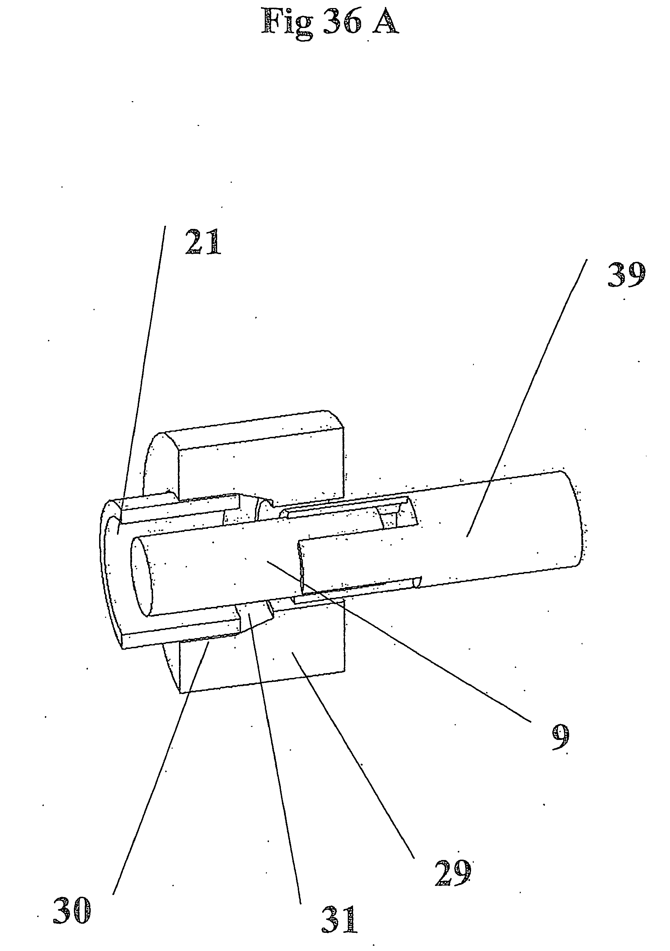

Figure 36A is a view from another angle of the mounted parts, and it can be better seen how the carbon electrode 9 is positioned further in under the outermost edge of the guard ring 21. Furthermore, the guard ring 21 is mounted perpendicularly into the cylindrical portion 30 of the ring holder 29. The conical portion 31 of the ring holder 29 and the electrode holder 39 are also shown.

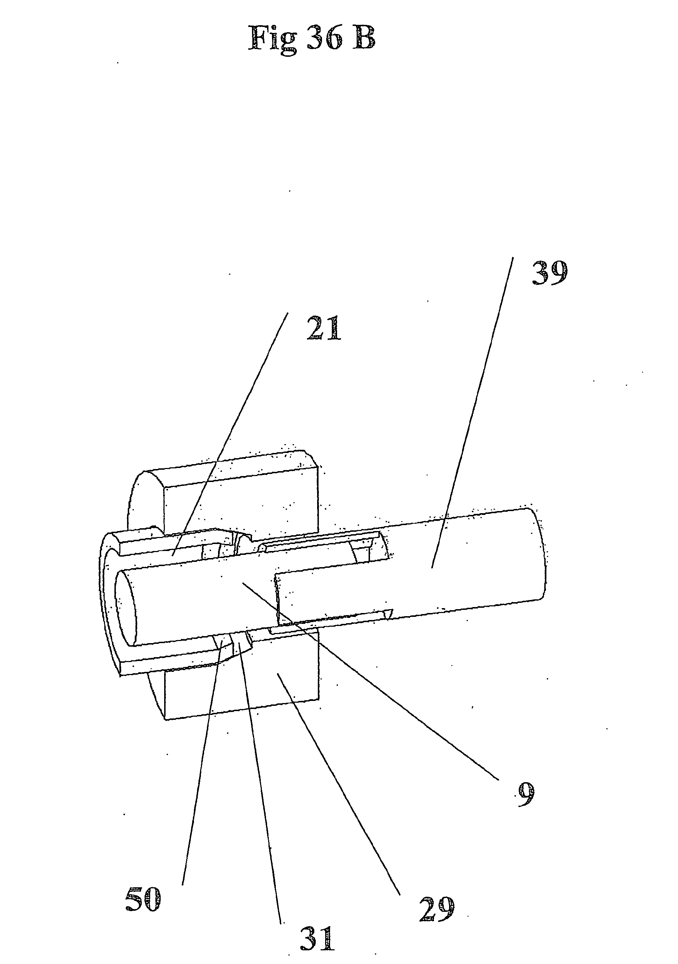

Figure 36B shows the deformation that takes place when the guard ring 21 is overheated and softened, and deformed by the operator's pressure and pressed deeper into the conical portion 31 of the ring holder 29.

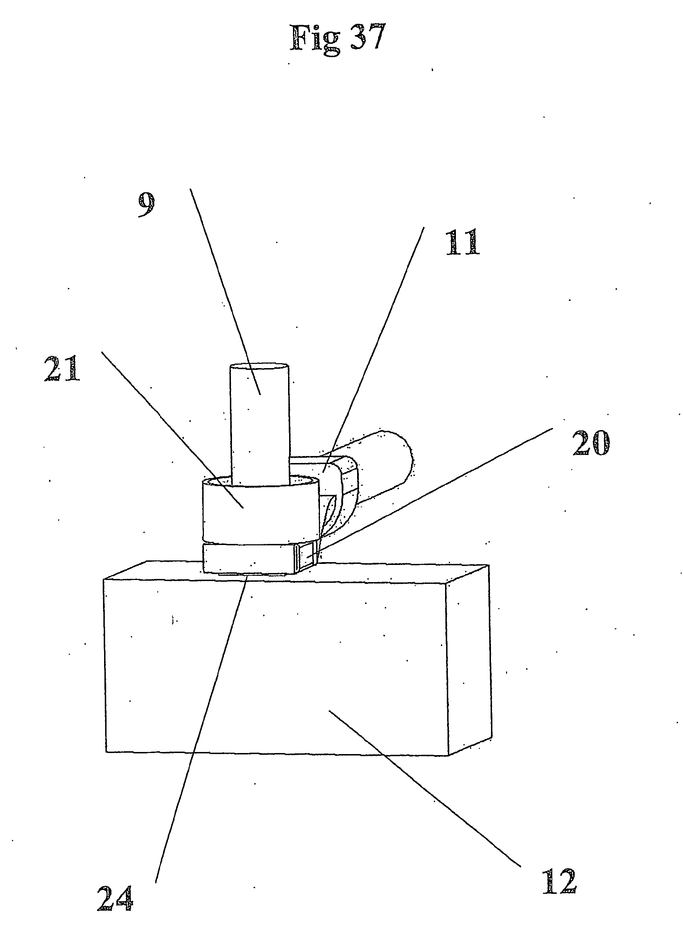

Figure 37 shows an electrically conductive connecting piece 11 in a brazing process where the brazing gun 7 has a normal angle of 90 degrees in relation to the electrically conductive connecting piece 11. The carbon electrode 9 and the guard ring 21 are the parts positioned in the front of the brazing gun 7, and they here represent the entire brazing gun 7. The brazing gun 7 is in flat contact with an electrically conductive connecting piece 11, which in this case is comprised by a cable shoe 11. The picture shows that the cable shoe is provided with a brazing clip and the underlying middle portion 24 of the brazing clip can be seen along with its protruding short side 20. The cable shoe 11 with the brazing clip is in contact with a workpiece 12 to which it will be brazed.

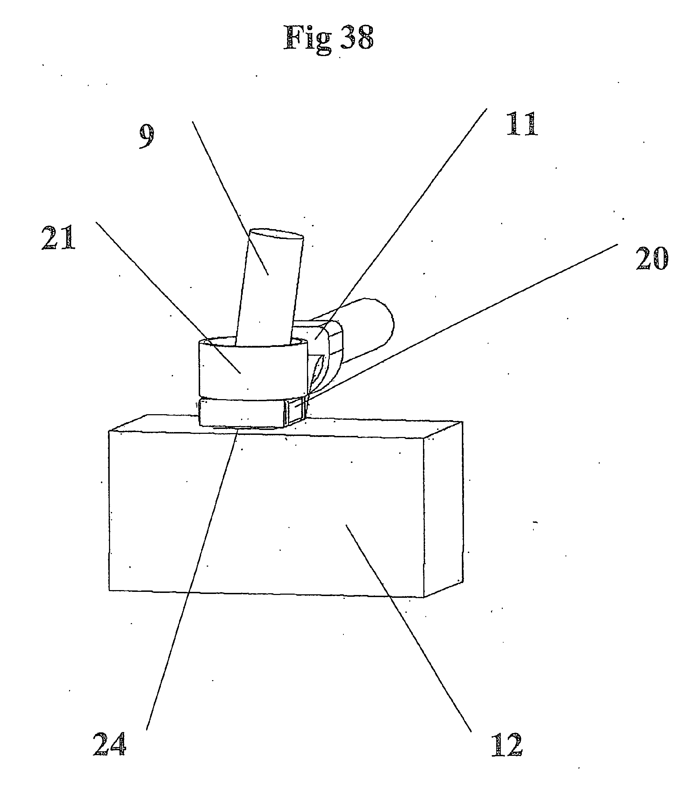

Figure 38 is the same view except that the brazing gun 7 with the carbon electrode 9 does not have a 90-degree angle in relation to the supporting surface. The gyro of the brazing gun 7, in which gyro the guard ring 21 is mounted, then makes sure the cable shoe 11 with the underlying middle portion 24 of the brazing clip is in flat contact with the workpiece 12.

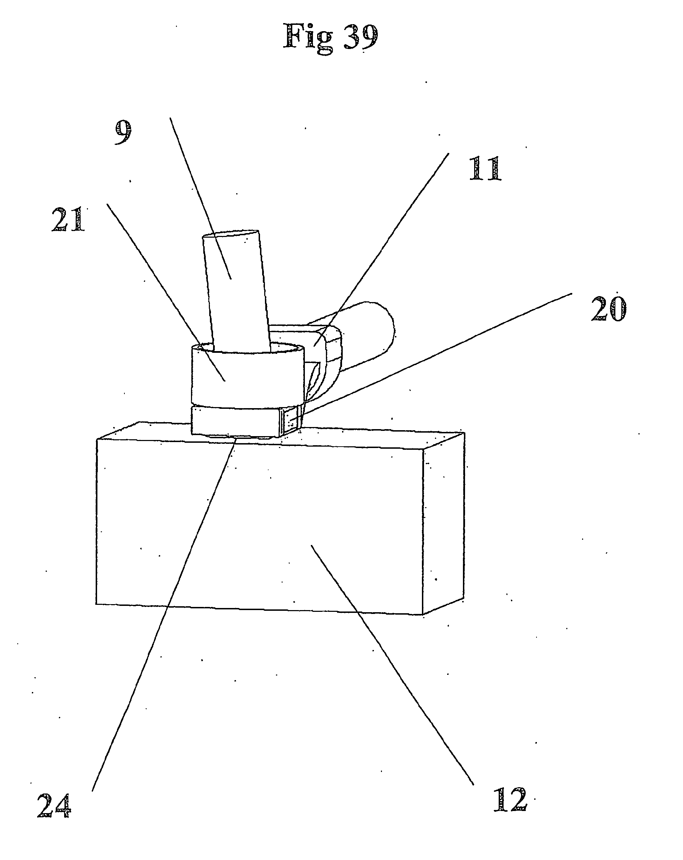

Figure 39 is the same view as before but with an angular offset in the other direction of the brazing gun 7. The brazing gun 7 is tilted in the other direction, which means that the brazing gun 7 can move without affecting the cable shoe's 11 position; this is thanks to the gyro provided in the brazing gun 7. Therefore, even if the operator tilts the brazing gun 7 in another angle towards the connecting piece 11, the central axis of the guard ring 21 will not change its angle to the surface of the connecting piece 11, so the risk of poor earthing and/or extinguished electric arc 26 and/or an unevenly thick braze joint and disturbed filler solidification is eliminated.

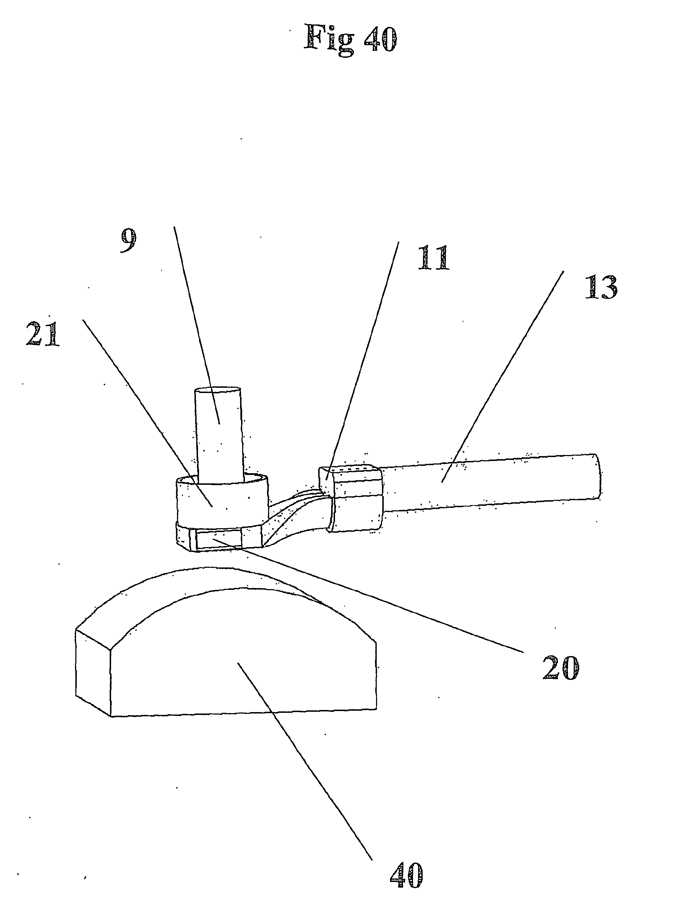

Figure 40 shows an electrically conductive connection 11 to be brazed against a non-planar workpiece 40. The drawing shows a cable shoe 11 with a cable or thread 13 and the short side 20 of a brazing clip. The brazing gun 7 represented by the guard ring 21 with the carbon electrode 9 is moved towards the cable shoe 11 and presses it down against the smooth supporting surface 40. Then, when the brazing process starts and the filler melts, a gyro suspension of the guard ring 21 allows for, for example, a cable shoe 11 to be shaped according to the possibly uneven supporting surface 40, in such a way that an evenly thick filler column is obtained between the electrically conductive connecting piece 11 and the uneven workpiece 40. This owes to the fact that when, for example, the cable shoe becomes hot, it also becomes so soft that the operator's pressure on the brazing gun, which is forwarded via the guard ring, shapes, for example, the cable shoe according to the supporting surface, even when this shaping requires a tilt of the guard ring 21 during the shaping process.

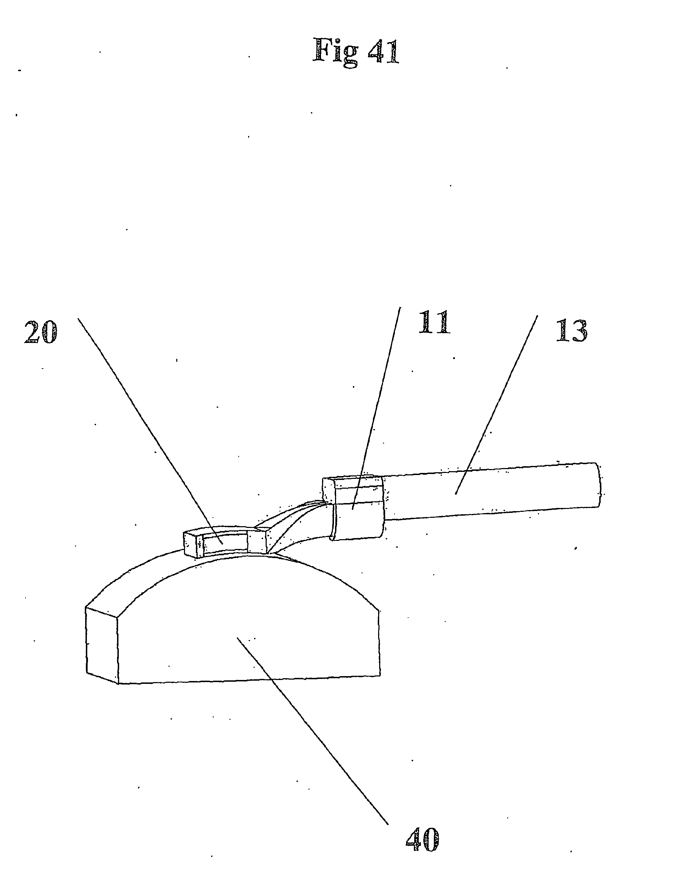

Figure 41 shows an electrically conductive connection 11 secured to a non-planar workpiece 40. Because of the heat, the cable shoe 11 has softened and has been shaped according to the supporting surface, i.e., the non-planar workpiece 40. An evenly thick filler column is obtained between the electrically conductive connecting piece 11 and the uneven workpiece 40.

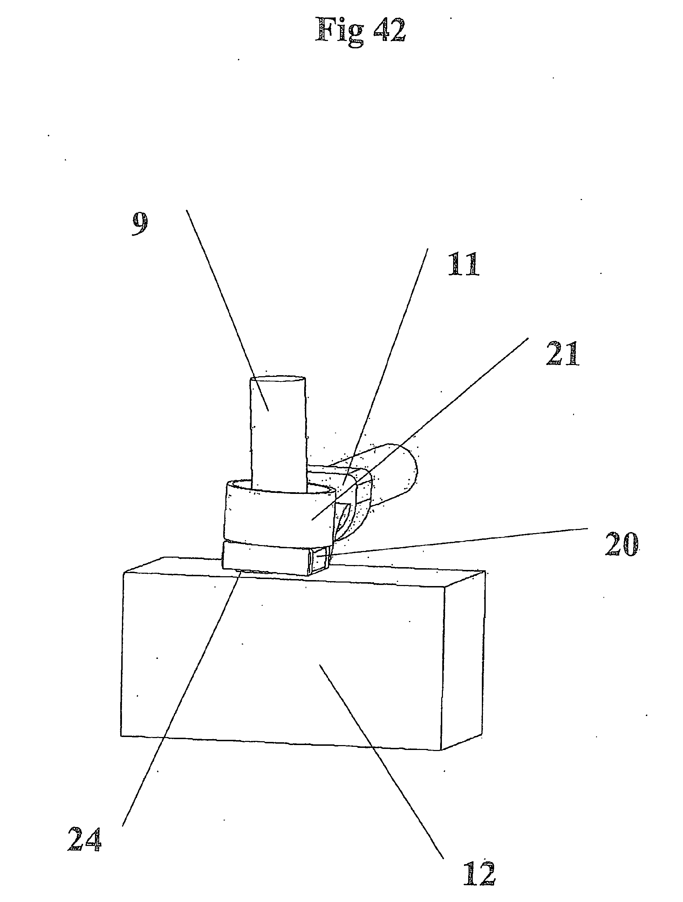

Figure 42 shows how the filler from a cable shoe 11 is melted off asymmetrically during the brazing process. The picture shows the carbon electrode 9 and the short side 20 of the brazing clip. From the underlying middle portion 24 of the brazing clip, the filler has partially melted off - in this case first from the right-hand side of the drawing. This means that the cable shoe 11 has had a different angle in relation to the underlying workpiece 12. Thanks to the gyro suspension in the brazing gun 7, the guard ring 21 allows this angular change.

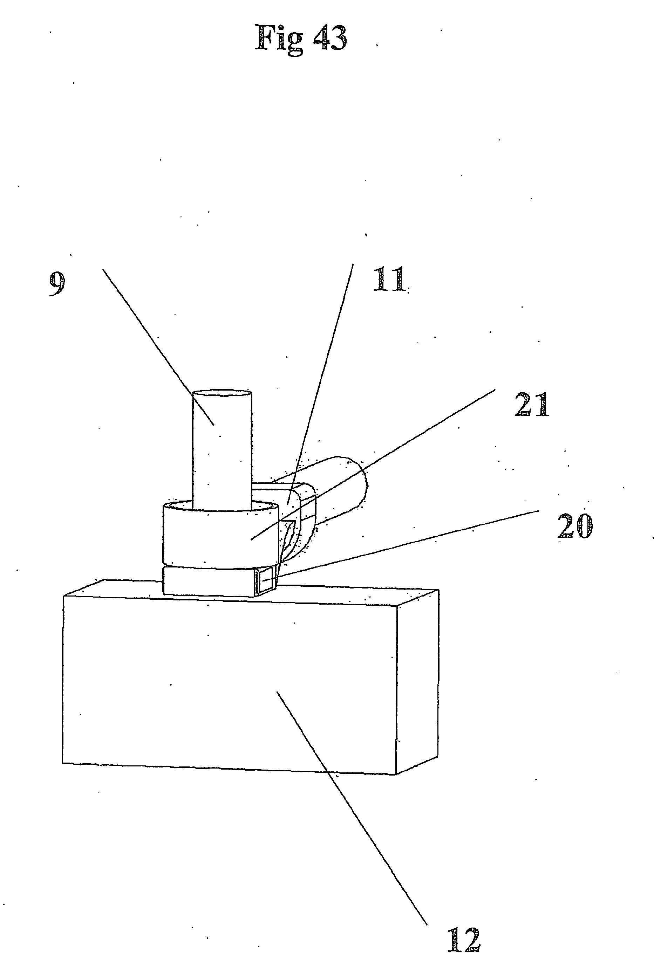

Figure 43 shows a complete brazing where the filler has melted off completely from the underlying middle portion 24 of the brazing clip. The result is that the cable shoe 11 has been secured flat against the workpiece 12. The gyro device thus allows the formation of an evenly thick filler column between the connecting piece 11 and the workpiece 12 despite the occurrence of angular changes during the brazing process itself between these two parts.

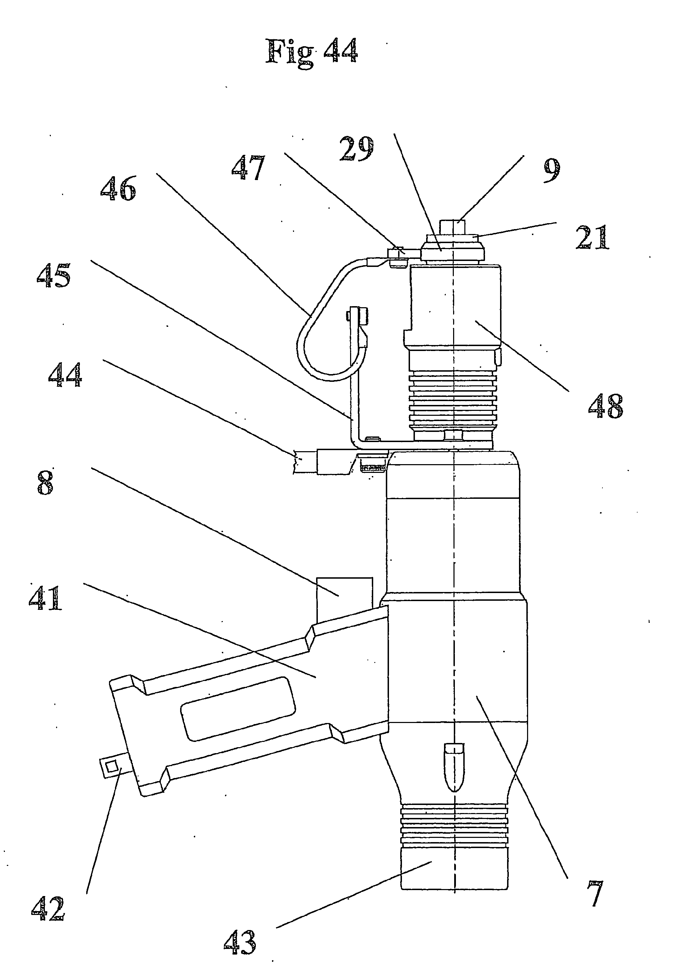

Figure 44 is a side elevational view of a brazing gun 7, and the front portion reveals the carbon electrode 9 partially inserted into the guard ring 21, and below, the ring holder 29 and the ring holder's connection tongue 47 for the earth cable, and from there an earthing strap 46 to the protective device 45 for the earthing strap and in connection to that, an earth cable 44. In the front portion, an ejection shell 48 for ejecting the carbon electrode 9 can also be seen. On the brazing gun 7 there is a trigger 8 on a handle 41 on whose lower portion there is a connection,42 for circuitry, and at the very rear there is an end portion 43.

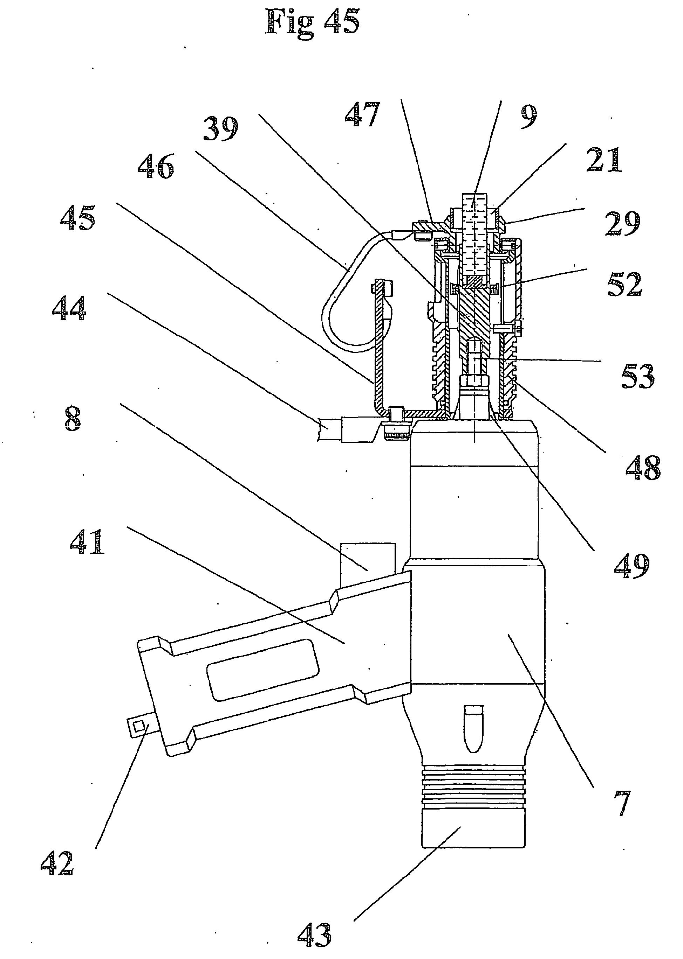

Figure 45 is a side elevational view of a brazing gun 7 with a cross-section of its front portion. At the very rear there is an end portion 43, and on the handle 41 there is a connection 42 for circuitry and a trigger 8. In the front portion, the carbon electrode 9 partially inserted in the guard ring 21 can be seen and, below, the ring holder 29 and the ring holder's connection tongue 47 for the earth cable, and from there an earthing strap 46 to the protective device 45 for the earthing strap, and in connection to that, an earth cable 44. Furthermore, the electrode holder 39 and a protective boot 49 can be seen. The protective boot 49 is applied between an axis 53 and the front end of the brazing gun 7. That way, dirt and gas are prevented from entering into the brazing gun through the axial bushing. The drawing also shows that the brazing gun 7 forms a right angle with the connecting piece 11. There is no tilt here. The drawing also-shows an ejection shell 48 which, by way of the ejection tray 52 allows for ejection of the carbon electrode 9.

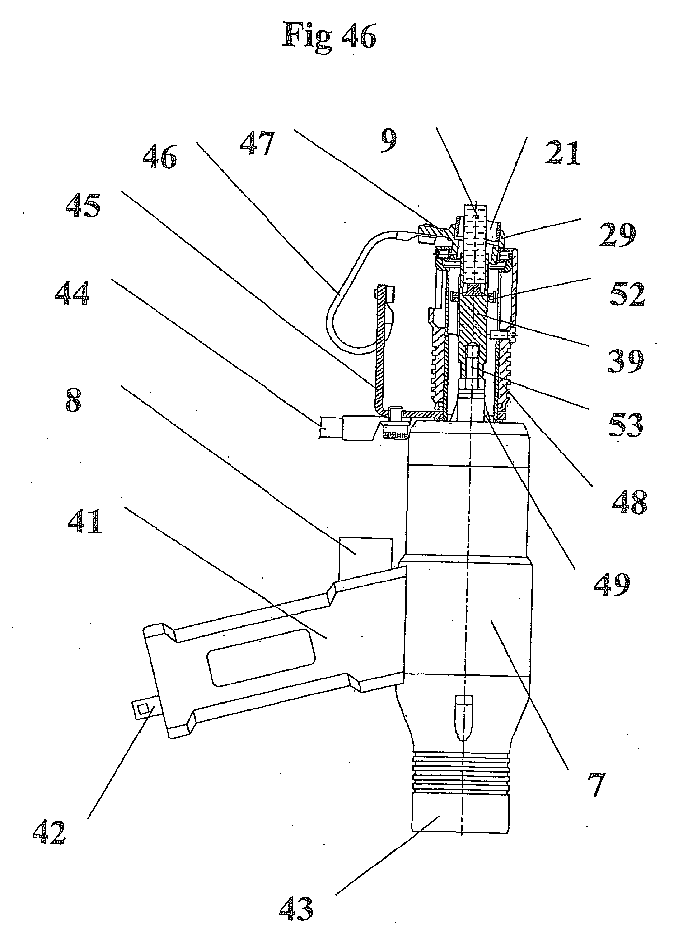

Figure 46 is the same side elevational view of the brazing gun 7 with its front portion in cross-section, but with a tilted gyro. At the very rear there is an end portion 43, and on the handle 41 there is a connection 42 for circuitry and a trigger 8. In the front portion, the carbon electrode 9 can be seen through the guard ring 21 and, below, the ring holder 29 and the ring holder's connection tongue 47 for the earth cable, and from there an earthing strap 46 to the protective device 45 for the earthing strap, and in connection to that an earth cable 44. Also shown are the electrode holder 39 and a protective boot 49 applied between an axis 53 and the front end of the brazing gun 7. The drawing shows that the gyro is tilted, which means that the brazing gun does not form a right angle with the connecting piece 11. However, the gyro allows for the guard ring 21 to form a right angle with the connecting piece 11 of electrically conductive material. The drawing also shows an ejection shell 48 which, via the ejection tray 52, allows for ejection of the carbon electrode 9.

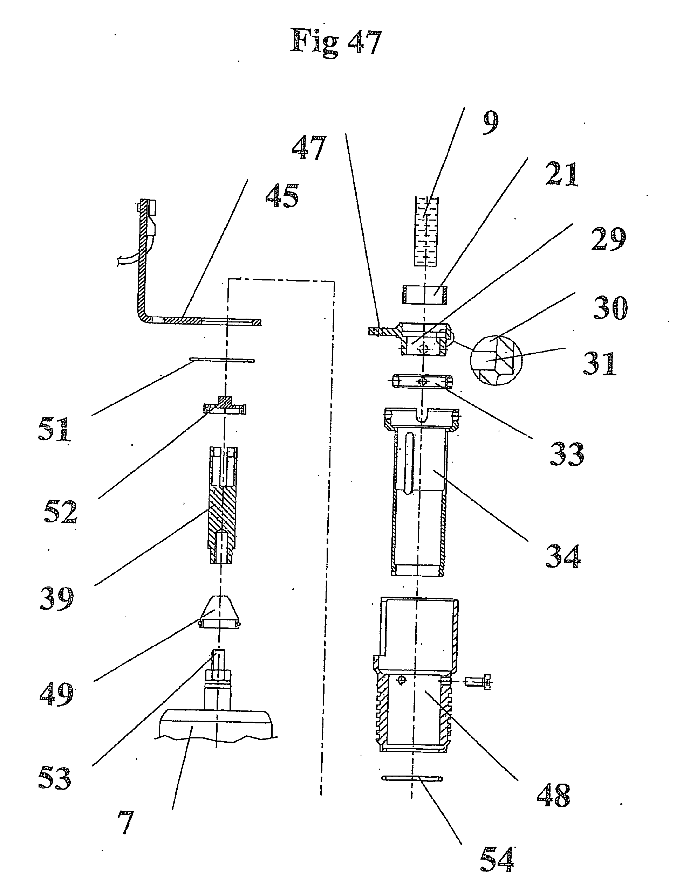

Figure 47 is an exploded view of the brazing gun's front portion. Visible from the brazing gun 7 are an axis 53, a protective boot 49, an electrode holder 39, an ejection tray 52, a locking ring 51, a protective device 45 for the earthing strap, and after that a friction ring 54, an ejection shell 48, a fixed joint 34, a cylindrical, movable middle portion 33. After that a ring holder 29 is shown, and a magnified portion of it shows a conical portion 31 and a cylindrical portion 30, and visible are also the connection tongue 47 for the earth cable, and a guard ring 21 and a carbon electrode 9.

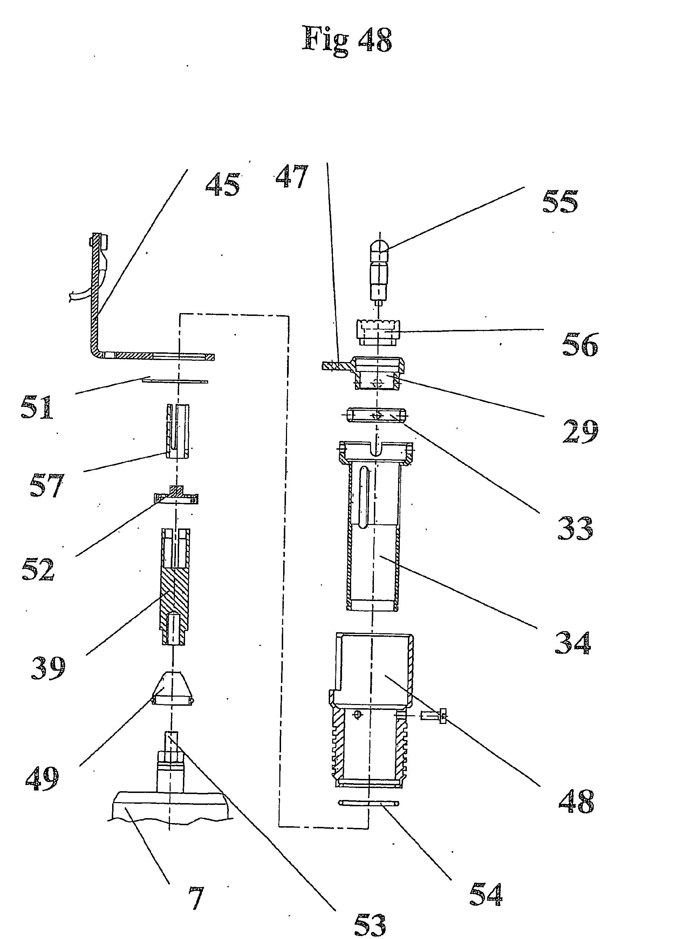

Figure 48 is an exploded view of the brazing gun for brazing with other types of brazing pins. The specified parts of the drawing correspond to Figure 47 except for three details. Between the ejection tray 52 and the locking ring 51, there is an adapter 57 making it possible to pin braze, using the same brazing gun 7 with the old type of brazing pins 55. In the very front of the brazing gun 7 there is a brazing pin 55 of another type. This also means that there must be a ceramic ring 56 instead of a metal guard ring. By inserting an adapter 57 in the electrode holder 39 and then choosing an appropriate formula in the electronics unit 2, one can use the present brazing process for the old type of brazing pins 55 and connecting pieces where there are no requirements for martensite-free brazings. This allows for the same device for brazing to be used, which is a great advantage.

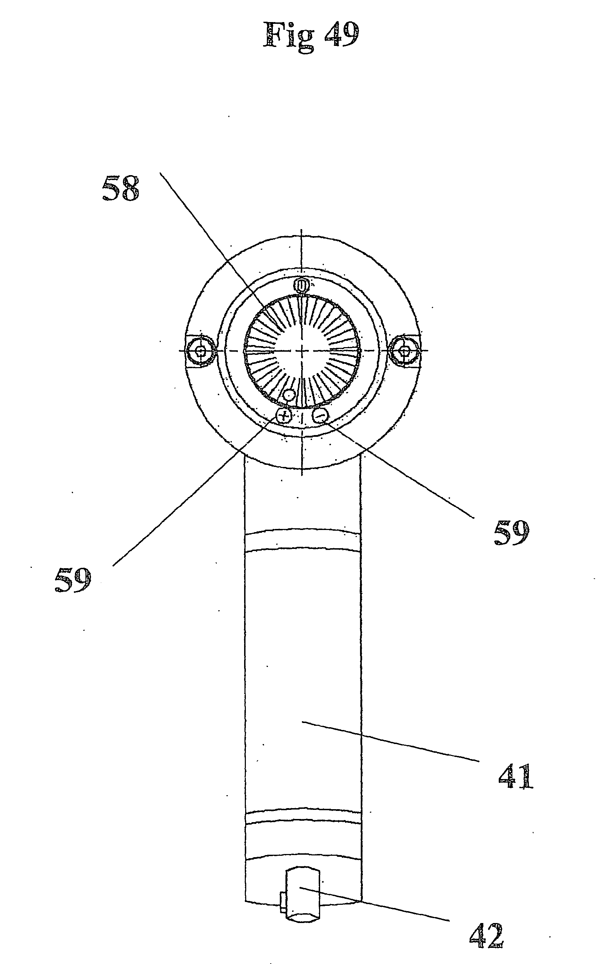

Figure 49 is a back view of the brazing gun and it shows a connection 42 for circuitry, a handle 41 and furthermore an instrument for setting the lifting height 58 and a scale 59.

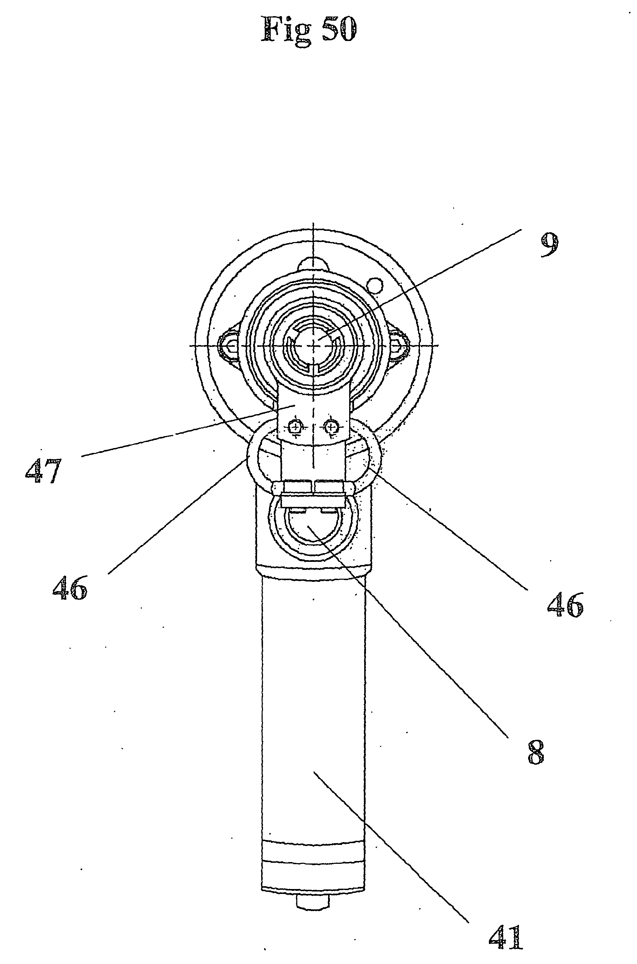

Figure 50 is a front view of the brazing gun and it also shows a connection 42 for circuitry along with a handle 41. It also shows the power switch 8 and the earthing strap 46, and the ring holder's connection tongue 47 for the earth cable and the carbon electrode 9.

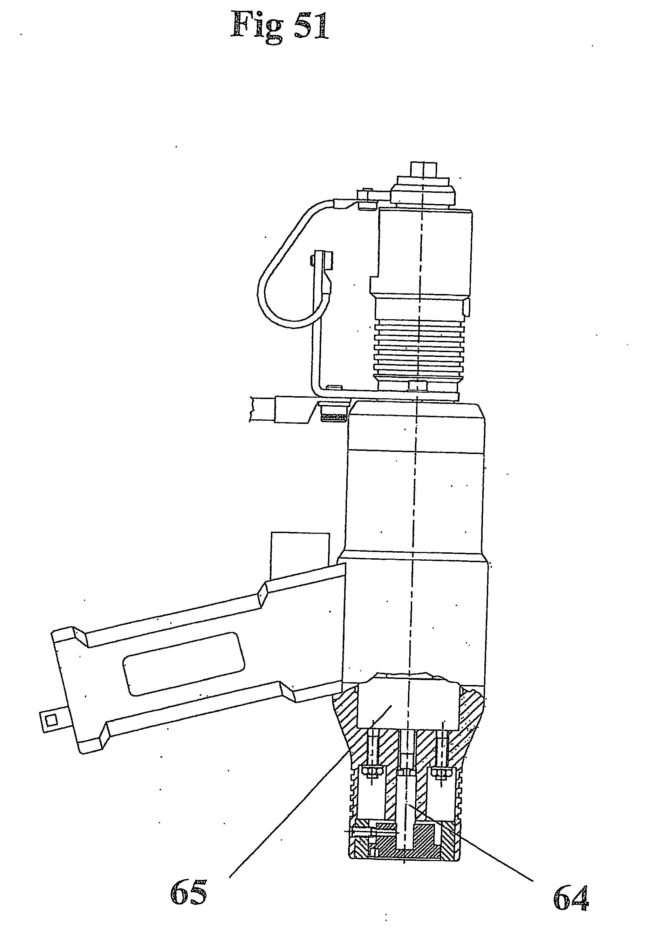

Figure 51 shows a view of the brazing gun 7 with the end portion 43 in cross-section, and it shows a hydraulic absorber 64 and the electromagnet 65. The brazing gun 7 lifts the carbon electrode 9 with the aid of the electromagnet 65 and an electric arc 26 is created.

In the present invention, the principle is to combine different functions and methods which together can create a new brazing process. The object has also been to combine different other methods to be used in the present brazing process where it is a requirement that the brazing result is free from structural changes in the steel, so called martensite-free brazing. Since batteries are almost always used as power source for this type of brazing, an overall object has been to save energy in every brazing in order to accomplish a greater number of brazings per battery before they are recharged. Furthermore, the present invention will allow for brazing of large-dimension connections with a cable of larger diameter, with less energy consumption. By setting different formulas in the electronics unit 2, the number of failed brazings is kept at a minimum. The brazing process controls and regulates the brazing by controlling the current or power over time in every phase of the brazing process: pre-brazing temperature phases, post-brazing temperature phases and brazing temperature phase for every specific brazing situation, with reduced time consumption and reduced energy consumption as a result. The process automatically attempts to ignite an extinguished electric arc over and over again until it has been re-ignited and the brazing is completed. Every brazing is registered and information is communicated immediately at the brazing and/or can be retrieved later. The process handles information in real time during the brazing process in such a way that if disturbances occur, for example, in the electric arc 26, output in time and/or in level is changed so that the effect of the disturbance on the final brazing result is reduced or eliminated. Temperature disturbances are compensated for. If an electric arc 26 is extinguished, it is restarted automatically. If an electric arc 26 is extinguished and cannot be re-ignited, or if no electric arc 26 was ever created, or in case of other disturbances that could not be compensated for through a change in output or if, for other reasons, an approved brazing could not be completed, the brazing process is interrupted while the voltage is taken off the gun 7, and information about this is communicated to the operator immediately or at a later time. In order to protect the electric arc 26 in the brazing process, the surface area of the carbon electrode is impregnated with an oil-based product. During the brazing process, the impregnation forms a gas that protects the electric arc 26. Between the connecting piece 11 of electrically conductive material and the brazing clip no flux is needed; since the brazing process is very fast in time, no substantial oxidation takes place on the connecting piece's 11 bottom surface or on the filler material. To save filler material, a small brazing clip is attached sideways over the connecting piece 11 with two clamping tabs where there are no protruding corners. Furthermore, the electrically conductive connecting piece 11 is knurled and/or blasted, which creates a larger interfacing surface, which results in faster absorption of energy and consequently heating of the connecting piece 11. The energy feed can be reduced with the brazing result maintained. The uneven surface results in the electron concentration occurring in local peaks, which facilitates for the electric arc 26 to be ignited and maintained. An initial high temperature of the connecting piece 11 reduces the risk of the carbon layer 27 later in the brazing process coming loose from the supporting surface and coming into contact with the electric arc 26. Furthermore, on the connecting piece 11 there are one or several small cavities 28 which absorb carbon composition from the environment and which act as anchoring points for the carbon layer 27. With the present new brazing process, brazing with the old type of brazing pins 55 is also possible by placing an adapter 57 in the electrode holder 39. Therefore, the present brazing device can, with a simple change, be used for other methods. A protective boot between an axis 53 and a front end of the gun 7 prevents penetration of smoke, gas and dirt. In order to obtain a repeatable constant lifting height for the electrode 9 there is a hydraulic continuous absorber 64 lifting the electrode 9 more slowly at a controlled lifting speed. The guard ring 21 is further suspended in a gimballed gyro device, which provides for a safer earthing and a more secure brazing on an uneven surface, so that an evenly thick filler column is obtained between the connecting piece 11 and the workpiece 12. Even if the operator tilts the brazing gun 7 in another angle against the connecting piece 11, the central axis of the guard ring 21 will not, because of the gyro device, change its angle against the surface of the connecting piece 11. Furthermore, the guard ring 21 comprises a mechanical overheating protection. When the process builds up surplus heat, the guard ring 21 is softened and penetrates by force of pressure deeper into the conical portion 31 of the ring holder 29, and the distance between the connecting piece 11 and the electrode 9 is reduced. Reduced lifting height results in reduction of the electric arc's 26 electric resistance. With current maintained, this means reduced power-build-up and results in a mechanical overheating protection With power maintained, the change in resistance of the electric arc 26 is detected by the electronics unit 2 which, in real time corrects the formula accordingly.

The drawings show only some embodiments of the invention, but it should be noted that it can be designed in many different ways within the scope of the following claims.

## Claims

1. A method of completing a martensite-free brazing process with controlled pre- and post-brazing temperature and controlled temperature of a brazing free from detrimental structural changes and (martensite formation, of a connecting piece (11) of electrically conductive material with a workpiece (12) of electrically conductive material, ***characterised* in that** (a) The brazing process is divided by time into different phases both before, during and after the brazing-temperature phase in which the output of the process controlled by pulse duration modulation according to adjusted formulas is allowed to assume different determined constant or varying values controlling and regulating the instantaneous temperature in a braze joint and adjacent areas so that, in the phases of the pre-brazing temperature, an initial fast increase in temperature is produced which subsequently passes over to a levelling of the temperature curve in order to obtain a carefully determined brazing temperature, and during the phases of the post-brazing temperature, the temperature is successively lowered in order to submit the steel material to a controlled cooling at determined levels during determined time periods to allow for state transitions in the steel material. (b) The process registers disturbances in real time and modifies and adapts the output formula to compensate for deviations from the desirable temperature curve during all phases. (c) In case of instantaneous failures of the electric arc, the process initiates restart routines for re-ignition, and modifies the formula to compensate for time losses and fall in temperature. (d) The process includes the operator selecting one of a number of different formulas adapted to different brazing situations, and the initial temperature of the workpiece (12) beings taken into consideration at process start for modification of this formula. (e) Process information and other data are collected, processed and stored for presentation at the desired moment, and comprises the basis for feedback, alarms, alarm-acknowledgement function, communications (35) and documentation by way of display (3) and external units including programming equipment for modification and complementing of the formula collection and computer programs. (f) The process also encompasses brazing formulas adapted to brazing with equipment and adapters (57) intended for the older type of pin brazing of different workpieces, connecting pieces, electrodes (55) and guard rings (56).

2. A device for the execution of the method according to Claim 1 for completing a martensite-free brazing process with controlled pre- and post-brazing temperature and controlled temperature of a brazing free from detrimental structural changes and martensite formation, of a connecting piece (11) of electrically conductive material with a workpiece (12) of electrically conductive material, ***characterised* in that** if comprises a power source (1), an electronics unit (2) and a brazing gum (7) comprising a power switch (8), an electromagnet (65), a carbon electrode (9) an electrically conductive guard ring (21) and a ring holder (29) having a cylindrical portion (30), a conical portion (31) and a stop ledge (32), wherein: (a) The power source (1) feeds the current to the electronics unit (2) where input data from different units are processed and where input data from the operator together with other input data determine one of a number of different formulas for the process output during the different phases of the brazing process, and when the power switch (8) is activated a carbon electrode (9) where only the surface area is petroleum-impregnated will short-circuit an electric circuit to the connecting piece (11) of electrically conductive material, preferably a cable shoe, and the electromagnet (65) in the brazing gun (7) will subsequently lift the hydraulically damped (64) lifting-speed-controlled carbon electrode (9) from the surface (25) of the connecting piece (11), the surface being geometrically prepared by knurling and/or blasting and provided with cavities, and an electric arc (26) will be ignited in the direction of the prepared surface (25) where local ridges and peaks have created electron or electron-hole concentrations, and will be maintained and, protected by gases emitted from the impregnated surface area of the carbon electrode (9), will work on the connecting piece (11). (b) Material from the carbon electrode (9) is released during the brazing process and settles in a layer (27) on the prepared surface (25) of the connecting piece (11) in the immediate vicinity of the electric arc (26), where the bond strength, thickness and appearance of the layer (27) are affected by the preparation of the surface (25). (c) Through the electrically conductive guard ring (21) the connecting piece (11) is given the opposite electric polarity in relation to the carbon electrode (9). (d) The guard ring (21) is joined with the gun (7) by a gimballed gyro in such a way that incorrect angle of the gun (7) or an angular change of the gun (7) or the connecting piece (11) during the brazing process does not interfere with the ring's (21) electric contact with, or processing of, the connecting piece (11) in order to obtain a shaping of the connecting piece (11) against the workpiece (12) and an evenly thick filler column. (e) The guard ring (21), the ring holder (29) and the ring holder's (29) cylindrical portion (30), conical portion (31) and stop ledge (32) co-operate in such a way that the cylindrical portion (30) directs the insertion of, and prevents the guard ring (21) from assuming too great a tilt at mounting, while the conical portion (31) secures the guard ring (21) by pinching when the latter is inserted even if it is tilted by the operator. (f) The parts together comprise a mechanical overheating protection which, at an excessive temperature, through the operator's pressure produces a shape transition (50) of the guard ring (21) so that it is pressed further into its seat (31), and consequently shortens the length of the electric arc (26) and reduces its resistance, which reduces its heat build-up directly through component-controlled, or indirectly through formula-controlled limitation of power. (g) The stop ledge (32) limits the axial movement of the reshaped guard ring (21) in order to avoid too short an electric arc (26). (h) The heat initially built up in the process is quickly absorbed by the geometrically prepared surface (25) of the connecting piece (11) since the surface-to-mass ratio is great, and initially raises the temperature of the connecting piece (11) quickly enough for disturbing oxide formation between the connecting piece (11) and the filler material (18) not to reach a significant level before these parts are joined. (i) The heat built up will be transferred to a workpiece (12) through a flux and, during slower increase in temperature to intended brazing temperature, will join the workpiece (12), the connecting piece (11) and the filler material (18) in a braze joint, whereupon, in accordance with the set formula, the electric arc (25) is regulated so that the temperature of the work material (12) falls to a level where a possibly formed martensite structure during a certain time is transformed to another structure.

3. A device according to Claim 2, ***characterised* in that** the connecting piece's (11) geometrically prepared surface (25) is provided with one or several cavities (23) absorbing carbon material from the environment and act as anchoring points for the released carbon layer.

4. A device according to Claim 2, ***characterised* in that** the brazing clip (18) with two tabs (19) is partially secured by pinching sideways under the connecting piece (11).

5. A device according to Claim 2, ***characterised* in that**, by use of an adapter (57) inserted into the electrode holder (39) and appropriate formula, the older type of brazing process with metal electrode (55) can be realised as well.

6. A device according to Claim 2*,* ***characterised* in that** the carbon electrode's (9) surface area has been petroleum-impregnated whereas the short ends (22) have not been impregnated so that when the electric arc (26) is started, the temperature increases faster in the connecting piece's (11) surface (25) because no impregnator needs to be gasified from the end (22) of the electrode, and a better bond strength is consequently obtained between released carbon layer (27) and the connecting piece (11) by the higher temperature and absence of petroleum products on the surface (25) of the connecting piece (11).

7. A device according to Claim 2*,* ***characterised* in that** a protective boot (49) is applied between an axis (53) and the front end of the brazing gun (7).

## Patentansprüche

1. Verfahren zum Vervollständigen eines Martensit freien Hartlötverfahrens mit gesteuerter Vor- und Nachlöttemperatur und gesteuerter Temperatur eines Lötvorgangs ohne schädliche Strukturänderungen und Martensitbildung zwischen einem Verbindungsstück (11) aus elektrisch leitfähigem Material und einem Werkstück (12) aus elektrisch leitfähigem Material, **dadurch gekennzeichnet, dass**: (a) Das Hartlötverfahren zeitlich in unterschiedliche Phasen unterteilt wird, sowohl vor, während als auch nach der Hartlöt-Temperaturphase, in welcher der Austrag des Verfahrens, der durch eine Impulsdauermodulation entsprechend eingestellter Formeln gesteuert wird, unterschiedlich bestimmte, konstante oder variierende Werte annehmen darf, welche die momentane Temperatur in einer Lötverbindung und angrenzenden Flächen steuern und regulieren, so dass in der Phase der Vorlöttemperatur eine anfänglich schnelle Zunahme der Temperatur erzeugt wird, welche nachfolgend übergeht in ein Abflachen der Temperaturkurve, um eine sorgfältig bestimmte Löttemperatur zu erhalten, und während der Phasen der Nachlöttemperatur die Temperatur sukzessive abgesenkt wird, um das Stahlmaterial einem gesteuerten Abkühlen an bestimmten Niveaus während vorbestimmter Zeitdauern auszusetzen, um Zustandsübergänge in dem Stahlmaterial zu erlauben.
(b) Das Verfahren registriert Störungen in Echtzeit und modifiziert die Austragsformeln und passt sie so an, dass Abweichungen von der gewünschten Temperaturkurve während aller Phasen kompensiert werden. (c) Im Falle eines momentanen Versagens des Lichtbogens initiiert das Verfahren Neustartroutinen für die Neuzündung und modifiziert die Formeln, um Zeitverluste und einen Temperaturabfall zu kompensieren. (d) Der Prozess umfasst den Bediener, der eine von einer Anzahl von verschiedenen Formeln auswählt, die an unterschiedliche Lötsituationen angepasst sind, und die Anfangstemperatur des Werkstücks (12), die beim Verfahrensstart zur Modifikation dieser Formeln werden berücksichtigt. (e) Eine Prozessinformation und andere Daten werden gesammelt, verarbeitet und zur Präsentation im gewünschten Moment gespeichert, und sie umfasst die Basis für eine Rückinformation, Alarme, eine Alarm-Bestätigungsfunktion, Kommunikationen (35) und eine Dokumentation mithilfe eines Displays (3) und externer Einheiten, einschließlich einer Programmiereinrichtung zur Modifikation und Vervollständigung der Formelsammlung und Computerprogramme. (f) Das Verfahren umfasst auch Lötfomeln, die an ein Löten mit Equipment und Adaptern (57) angepasst sind, welche für die ältere Art eines Stiftlötens unterschiedlicher Werkstücke, von Verbindungsstücken, Elektroden (55) und Schutzringen (56) gedacht sind.

2. Vorrichtung zur Ausführung des Verfahrens nach Anspruch 1 zum Vervollständigen eines Martensit freien Hartlötverfahrens mit gesteuerter Vor- und Nachlöttemperatur und gesteuerter Temperatur eines Lötvorgangs ohne schädliche strukturelle Änderungen und Martensitbildung zwischen einem Verbindungsstück (11) aus elektrisch leitfähigem Material und einem Werkstück (12) aus elektrisch leitfähigem Material, **dadurch gekennzeichnet, dass** dieses eine Leistungsquelle (1), eine elektronische Einheit (2) und eine Lötpistole (7) mit einem Leistungsschalter (8), einem Elektromagnet (65), einer Kohlenstoffelektrode (9), einem elektrisch leitfähigen Schutzring (21) und einem Ringhalter (29) umfasst, der einen zylinderförmigen Bereich (30), einen konischen Bereich (31) und eine Stoppkante (32) hat, in welche: (a) die Leistungsquelle (1) den Strom an die elektronische Einheit (2) leitet, in welcher Eingangsdaten aus unterschiedlichen Einheiten verarbeitet werden und in welcher Eingangsdaten von dem Bediener zusammen mit anderen Eingangsdaten eine von einer Mehrzahl von unterschiedlichen Formeln des Prozessaustrags während der unterschiedlichen Phasen des Lötprozesses bestimmen, und wenn der Leistungsschalter (8) aktiviert ist, wird eine Kohlenstoffelektrode (9), dort, wo nur der Oberflächenbereich Petroleum imprägniert ist, einen elektrischen Schaltkreis mit dem Verbindungsstück (11) aus elektrisch leitfähigem Material, vorzugsweise einem Kabelschuh, kurzschließen und wird der Elektromagnet (65) in der Lötpistole (7) nachfolgend die hydraulisch gedämpfte (64) in ihrer Hebegeschwindigkeit gesteuerte Kohlenstoffelektrode (9) von der Oberfläche (25) des Verbindungsstücks (11) anheben, wobei die Oberfläche durch ein Rändeln und/oder Abstrahlen geometrisch präpariert ist und mit Vertiefungen versehen ist, und ein Lichtbogen (26) wird in Richtung der präparierten Oberfläche (25) gezündet, wo lokale Rippen und Spitzen Elektronen- oder Elektronenlochkonzentrationen erzeugt haben, und wird beibehalten und durch Gase geschützt, die aus dem imprägnierten Oberflächenbereich der Kohlenstoffelektrode (9) emittiert werden, wird auf dem Verbindungsstück (11) arbeiten. (b) Material von der Kohlenstoffelektrode (9) wird während des Lötprozesses freigegeben und setzt sich in einer Schicht (27) auf der präparierten Oberfläche (25) des Verbindungsstücks (11) in unmittelbarer Nähe des Lichtbogens (26) ab, wobei die Bindungsfestigkeit, Dicke und das Erscheinungsbild der Schicht (27) durch die Präparierung der Oberfläche (25) beeinträchtigt werden. (c) Durch den elektrisch leitfähigen Schutzring (21) des Verbindungsstücks (11) wird die entgegengesetzte elektrische Polarität in Bezug zu der Kohlenstoffelektrode (9) gegeben. (d) Der Schutzring (21) ist mit der Pistole (7) durch einen kardanischen Kreisel verbunden, in der Weise, dass ein nicht korrekter Winkel der Pistole (7) oder eine Winkeländerung der Pistole (7) oder des Verbindungsstücks (11) während des Lötprozesses nicht mit dem elektronischen Kontakt des Rings (21) mit dem Verbindungsstück (11), oder beim Bearbeiten desselben, in Störung gerät, um eine Anformung des Verbindungsstücks (1) an dem Werkstück (12) und eine gleichmäßig dicke Füllstoffsäule zu erhalten. (e) Der Schutzring (21), der Ringhalter (29) und der zylindrische Bereich (30) des Ringhalters (29), der konische Bereich (31) und die Stoppkante (32) wirken in der Weise miteinander zusammen, dass der zylindrische Bereich (30) die Einführung des Schutzrings (21) leitet und diesen daran hindert, bei der Montage zu stark geneigt zu werden, während der konische Bereich (31) den Schutzring (21) durch Einklemmen festlegt, wenn letzterer eingeführt wird, selbst dann, wenn dieser vom Bediener geneigt wird. (f) Die Teile zusammen umfassen einen mechanischen Überhitzungsschutz, welcher bei einer übermäßigen Temperatur durch den Druck des Bedieners eine Umformung (50) des Schutzrings (21) erzeugt, so dass dieser weiter in seinen Sitz (31) gepresst wird und folglich die Länge des Lichtbogens (26) kürzt und seinen Widerstand verringert, was seinen Wärmeaufbau direkt durch eine Komponenten gesteuerte oder indirekt durch eine Formel gesteuert Leistungsbegrenzung verringert. (g) Die Stoppkante (32) begrenzt die axiale Bewegung des umgeformten Schutzrings (21), um einen zu kurzen Lichtbogen (26) zu vermeiden. (h) Die anfänglich aufgebaute Wärme in dem Prozess wird schnell durch die geometrisch präparierte Oberfläche (25) des Verbindungsstücks (11) absorbiert, da das Oberfläche-zu-Masse-Verhältnis groß ist, und hebt anfänglich die Temperatur des Verbindungsstücks (11) schnell genug, um eine Oxidbildung zwischen dem Verbindungsstück (11) und dem Füllmaterial (18) dahingehend zu stören, dass diese kein signifikantes Niveau erreicht, bevor diese Teile verbunden sind. (i) die aufgebaute Wärme wird zum Werkstück (12) über einen Flux übertragen und wird während einer langsameren Zunahme der Temperatur bis zur vorgesehenen Löttemperatur das Werkstück (12), das Verbindungsstück (11) und das Füllmaterial (18) in einer Lötverbindung verbinden, woraufhin, in Übereinstimmung mit den eingestellten Formeln, der Lichtbogen (25) so reguliert wird, dass die Temperatur des Werkmaterials (12) auf ein Niveau abfällt, auf welchem eine möglicherweise zu einer bestimmten Zeit gebildete Martensitstruktur in eine andere Struktur umgewandelt wird.

3. Vorrichtung nach Anspruch 2, **dadurch gekennzeichnet, dass** die geometrisch präparierte Oberfläche (25) des Verbindungsstücks (11) mit ein oder mehreren Vertiefungen (23) versehen ist, um Kohlenstoffmaterial aus der Umgebung zu absorbieren und als Ankerpunkte für die freigegebene Kohlenstoffschicht zu wirken.

4. Vorrichtung nach Anspruch 2, **dadurch gekennzeichnet, dass** die Lötklammer (18) mit zwei Zungen (19) teilweise durch Seitenklemmen unter dem Verbindungsstück (11) befestigt ist.

5. Vorrichtung nach Anspruch 2, **dadurch gekennzeichnet, dass** durch Verwenden eines Adapters (57), der in den Elektrodenhalter (39) eingeführt ist, und geeignete Formeln der ältere Typ eines Lötprozesses mit einer Metallelektrode (55) ebenso realisiert werden kann.

6. Vorrichtung nach Anspruch 2, **dadurch gekennzeichnet, dass** der Oberflächenbereich der Kohlenstoffelektrode (9) mit Petroleum imprägniert wurde, während die kurzen Enden (22) nicht imprägniert wurden, so dass, wenn der Lichtbogen (26) gestartet wird, die Temperatur in der Oberfläche (25) des Verbindungsstücks (11) schneller ansteigt, weil kein Imprägnierungsmittel von den Enden (22) der Elektrode in den gasförmigen Zustand versetzt werden muss, und eine bessere Bindungsfestigkeit wird folglich zwischen der gelösten Kohlenstoffschicht (27) und dem Verbindungsstück (11) durch die höhere Temperatur und das Nichtvorhandensein von Petroleumprodukten auf der Oberfläche (25) des Verbindungsstücks (11) erhalten.

7. Vorrichtung nach Anspruch 2, **dadurch gekennzeichnet, dass** ein schützender Schuh (49) zwischen einer Achse (53) und dem vorderen Ende der Lötpistole (7) angebracht ist.

## Revendications

1. Procédé de réalisation d'un processus de brasage sans martensite à une température de pré-brasage et de post-brasage régulée et à une température régulée d'un brasage exempt de changements structurels néfastes et de formation de martensite, d'une pièce de liaison (11) en matériau électriquement conducteur avec une pièce de fabrication (12) en matériau électriquement conducteur, **caractérisé en ce que** (a) le processus de brasage est divisé dans le temps en différentes phases à la fois avant, pendant et après la phase de température de brasage dans lesquelles la sortie du processus régulée par modulation d'impulsions en durée conformément aux formules ajustées peut prendre différentes valeurs constantes ou variables déterminées contrôlant et régulant la température instantanée dans un joint de brasage et les zones adjacentes de telle sorte que, dans les phases de la température de pré-brasage, il se produit une augmentation initiale rapide de température qui passe ensuite à un nivellement de la courbe de température afin d'obtenir une température de brasage soigneusement déterminée, et lors des phases de la température de post-brasage, la température est successivement abaissée afin de soumettre le matériau acier à un refroidissement régulé à des niveaux déterminés au cours de périodes de temps déterminées pour permettre des transitions d'état du matériau acier ; (b) le processus enregistre des perturbations en temps réel et modifie et adapte la formule de sortie pour compenser les écarts par rapport à la courbe de température souhaitable pendant toutes les phases ; (c) dans le cas d'anomalies instantanées de l'arc électrique, le processus déclenche des routines de redémarrage pour réamorçage, et modifie la formule pour compenser les pertes de temps et la chute de température ; (d) le procédé comprend la sélection par l'utilisateur d'une parmi plusieurs formules différentes adaptées à des situations de brasage différentes, la température initiale de la pièce de fabrication (12) étant prise en considération au début du processus pour la modification de cette formule ; (e) des informations de processus et autres données sont collectées, traitées et stockées pour la présentation au moment souhaité, et comprennent la base pour la rétroaction, les alarmes, la fonction d'accusé de réception d'alarme, les communications (35) et la documentation au moyen de l'unité d'affichage (3) et des unités externes comprenant l'équipement de programmation pour modification et réalisation de la collecte de formules et de programmes informatiques ; (f) le procédé englobe également des formules de brasage adaptées au brasage avec des équipements et adaptateurs (57) destinés au type plus ancien de brasage de broches de différentes pièces de fabrication, pièces de liaison, électrodes (55) et anneaux de garde (56).

2. Dispositif pour l'exécution du procédé selon la revendication 1 permettant de réaliser un processus de brasage sans martensite à une température de pré-brasage et de post-brasage régulée et à une température de brasage régulée exempte de changements structurels néfastes et de formation de martensite, d'une pièce de liaison (11) de matériau électriquement conducteur avec une pièce de fabrication (12) de matériau électriquement conducteur, **caractérisé en ce qu'**il comprend un source d'énergie (1), une unité électronique (2) et un pistolet de brasage (7) comprenant un interrupteur d'alimentation (8), un électroaimant (65), une électrode au carbone (9), un anneau de garde électriquement conducteur (21) et un support d'anneau (29) comportant une partie cylindrique (30), une partie conique (31) et une butée d'arrêt (32), dans lequel : (a) la source d'alimentation (1) fournit le courant à l'unité électronique (2) où sont traitées les données d'entrée issues des différentes unités et où les données d'entrée provenant de l'utilisateur conjointement avec d'autres données d'entrée déterminent l'une d'un certain nombre de formules différentes pour la sortie de processus pendant les différentes phases du processus de brasage, et lorsque l'interrupteur d'alimentation (8) est activé, une électrode au carbone (9) où seule la surface est imprégnée de pétrole court-circuite un circuit électrique vers la pièce de liaison (11) du matériau électriquement conducteur, de préférence une cosse de câble, et l'électroaimant (65) dans le pistolet de brasage (7) soulève ensuite l'électrode au carbone à Vitesse de levage régulée (9) amortie hydrauliquement (64) de la surface (25) de la pièce de liaison (11), la surface étant préparée géométriquement par moletage et/ou sablage et dotée de cavités, et un arc électrique (26) est amorcé dans la direction de la surface préparée (25) où des crêtes et pics locaux ont créé des concentrations d'électrons ou d'électrons-trous, et est maintenu et, protégé par des gaz émis par la surface imprégnée de l'électrode au carbone (9), opère sur la pièce de liaison (11) ; (b) la substance de l'électrode au carbone (9) est libérée au cours du processus de brasage et se dépose dans une couche (27) sur la surface préparée (25) de la pièce de liaison (11) au voisinage immédiat de l'arc électrique (26), où la résistance d'adhésion, l'épaisseur et l'aspect de la couche (27) sont affectés par la préparation de la surface (25) ; (c) grâce à l'anneau de garde électriquement conducteur (21), la pièce de liaison (11) se voit conférer la polarité électrique opposée par rapport à l'électrode au carbone (9); (d) l' anneau de garde (21) est joint avec le pistolet (7) par un gyroscope à cardans de telle manière qu'un angle incorrect du pistolet (7) ou un changement angulaire du pistolet (7) ou de la pièce de liaison (11) au cours du processus de brasage n'interfère pas avec le contact électrique de l'anneau (21) avec la pièce de liaison (11), ou le traitement de celle-ci, afin d'obtenir un façonnage de la pièce de liaison (11) contre la pièce de fabrication (12) et une colonne de remplissage d'épaisseur uniforme ; (e) l'anneau de garde (21), le support d'anneau (29) et la partie cylindrique (30) du support d'anneau (29), la partie conique (31) et la butée d'arrêt (32) coopèrent de telle manière que la partie cylindrique (30) dirige l'insertion de l'anneau de garde (21) et l'empêche de prendre une inclinaison trop importante au montage, tandis que la partie conique (31) immobilise l'anneau de garde (21) par pincement lorsque ce dernier est inséré, même s'il est incliné par l'utilisateur ; (f) l'ensemble des parties comprend une protection contre la surchauffe mécanique qui, à une température excessive, grâce à la pression exercée par l'utilisateur, produit une transition de forme (50) de l'anneau de garde (21) de telle sorte qu'il est enfoncé plus profondément dans son siège (31), et raccourcit par conséquent la longueur de l'arc électrique (26) et réduit sa résistance, ce qui réduit son accumulation de chaleur directement grâce à la limitation de puissance régulée par les composants ou indirectement grâce à la limitation de puissance régulée par formule ; (g) la butée d'arrêt (32) limite le mouvement axial de l'anneau de garde refaçonné (21) afin d'éviter un arc électrique trop court (26) ; (h) la chaleur initialement accumulée au cours du processus est rapidement absorbée par la surface préparée géométriquement (25) de la pièce de liaison (11) étant donné que le rapport surface sur masse est important, et provoque initialement une augmentation suffisamment rapide de la température de la pièce de liaison (11) pour perturber la formation d'oxyde entre la pièce de liaison (11) et le matériau de remplissage (18) qui n'atteindra pas un niveau significatif avant que ces pièces soient assemblées ; (i) l'accumulation de chaleur sera transférée à une pièce de fabrication (12) par le biais d'un flux et, au cours d'une augmentation plus lente de la température à la température de brasage voulue, assemblera la pièce de fabrication (12), la pièce de liaison (11) et le matériau de remplissage (18) dans un joint de brasage, sur quoi, conformément à la formule définie, l'arc électrique (25) est régulé de telle sorte que la température du matériau de travail (12) tombe à un niveau où une structure martensitique s'étant éventuellement formée pendant un certain temps est transformée en une autre structure.

3. Dispositif selon la revendication 2, **caractérisé en ce que** la surface préparée géométriquement (25) de la pièce de liaison (11) est dotée d'une ou plusieurs cavités (23) absorbant du matériau de carbone de l'environnement et qui servent de points d'ancrage à la couche de carbone détachée.

4. Dispositif selon la revendication 2, **caractérisé en ce que** la pince à braser (18) avec deux languettes (19) est partiellement immobilisée par pincement latéral sous la pièce de liaison (11).

5. Dispositif selon la revendication 2, **caractérisé en ce que**, grâce à l'utilisation d'un adaptateur (57) inséré dans le support d'électrode (39) et de la formule appropriée, le type plus ancien de processus de brasage avec électrode métallique (55) peut également être réalisé.

6. Dispositif selon la revendication 2, **caractérisé en ce que** la surface de l'électrode au carbone (9) a été imprégnée avec du pétrole alors que les extrémités courtes (22) n'ont pas été imprégnées de telle sorte que lorsque l'arc électrique (26) est amorcé, la température augmente plus rapidement sur la surface (25) de la pièce de liaison (11) puisqu'aucun agent d'imprégnation n'a besoin d'être gazéifié à partir de l'extrémité (22) de l'électrode, et une meilleure résistance d'adhésion est par conséquent obtenue entre la couche de carbone séparée (27) et la pièce de liaison (11) grâce à la température supérieure et à l'absence de produits pétroliers sur la surface (25) de la pièce de liaison (11).

7. Dispositif selon la revendication 2, **caractérisé en ce qu'**une gaine de protection (49) est appliquée entre un axe (53) et l'extrémité avant du pistolet de brasage (7).
